(19) Europäisches Patentamt
European Patent Office
Office européen des brevets

(11) EP 3 027 673 B1

(12) **EUROPÄISCHE PATENTSCHRIFT**

(45) Veröffentlichungstag und Bekanntmachung des Hinweises auf die Patenterteilung:
**02.10.2019 Patentblatt 2019/40**

(21) Anmeldenummer: **14742532.6**

(22) Anmeldetag: **25.07.2014**

(51) Int Cl.:
***C08G 64/34*** (2006.01)
***C08G 65/26*** (2006.01)
***C08G 64/42*** (2006.01)
***C08K 5/51*** (2006.01)
***C08G 64/02*** (2006.01)

(86) Internationale Anmeldenummer:
**PCT/EP2014/065992**

(87) Internationale Veröffentlichungsnummer:
**WO 2015/014732 (05.02.2015 Gazette 2015/05)**

(54) **VERFAHREN ZUR HERSTELLUNG VON POLYETHERCARBONATPOLYOLEN**
METHOD FOR MANUFACTURING POLYETHER CARBONATE POLYOLS
PROCÉDÉ DESTINÉ À LA FABRICATION DE POLYÉTHERCARBONATPOLYOLES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.08.2013 EP 13179165**
**03.07.2014 EP 14175611**

(43) Veröffentlichungstag der Anmeldung:
**08.06.2016 Patentblatt 2016/23**

(73) Patentinhaber: **Covestro Deutschland AG**
**51373 Leverkusen (DE)**

(72) Erfinder:
- **LAEMMERHOLD, Kai**
**Shanghai, 200031 (CN)**
- **HOFMANN, Jörg**
**47800 Krefeld (DE)**
- **NEFZGER, Hartmut**
**50259 Pulheim (DE)**

(74) Vertreter: **Levpat**
**c/o Covestro AG**
**Gebäude 4825**
**51365 Leverkusen (DE)**

(56) Entgegenhaltungen:
**EP-A1- 2 530 101 US-A- 4 145 525**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 027 673 B1

## Beschreibung

Die vorliegende Erfindung betrifft ein Verfahren zur Herstellung von Polyethercarbonatpolyolen durch katalytische Copolymerisation von Kohlendioxid ($CO_2$) mit Alkylenoxiden in Gegenwart einer oder mehrerer H-funktioneller Startersubstanzen.

Die Herstellung von Polyethercarbonatpolyolen durch katalytische Umsetzung von Alkylenoxiden (Epoxiden) und Kohlendioxid in Anwesenheit von H-funktionellen Startersubstanzen ("Starter") wird seit mehr als 40 Jahren intensiv untersucht (z. B. Inoue et al, Copolymerization of Carbon Dioxide and Epoxide with Organometallic Compounds; Die Makromolekulare Chemie 130, 210-220, 1969). Diese Reaktion ist in Schema (I) schematisch dargestellt, wobei R für einen organischen Rest wie Alkyl, Alkylaryl oder Aryl steht, der jeweils auch Heteroatome wie beispielsweise O, S, Si usw. enthalten kann, und wobei e, f, g und h für eine ganzzahlige Zahl stehen, und wobei das hier im Schema (I) gezeigte Produkt für das Polyethercarbonatpolyol lediglich so verstanden werden soll, dass sich Blöcke mit der gezeigten Struktur im erhaltenen Polyethercarbonatpolyol prinzipiell wiederfinden können, die Reihenfolge, Anzahl und Länge der Blöcke sowie die OH-Funktionalität des Starters aber variieren kann und nicht auf das in Schema (I) gezeigte Polyethercarbonatpolyol beschränkt ist. Diese Reaktion (siehe Schema (I)) ist ökologisch sehr vorteilhaft, da diese Reaktion die Umsetzung eines Treibhausgases wie $CO_2$ zu einem Polymer darstellt. Als weiteres Produkt, eigentlich Nebenprodukt, entsteht das in Schema (I) gezeigte cyclische Carbonat (beispielsweise für R = $CH_3$ Propylencarbonat) sowie Dioxane (beispielsweise für R = $CH_3$ Dimethyldioxan). Die Dioxane bilden sich auch bei thermischer Belastung der Polyethercarbonatpolyole. Charakteristisch für Polyethercarbonatpolyole ist, dass zwischen den Carbonatgruppen diese Ethergruppen enthalten.

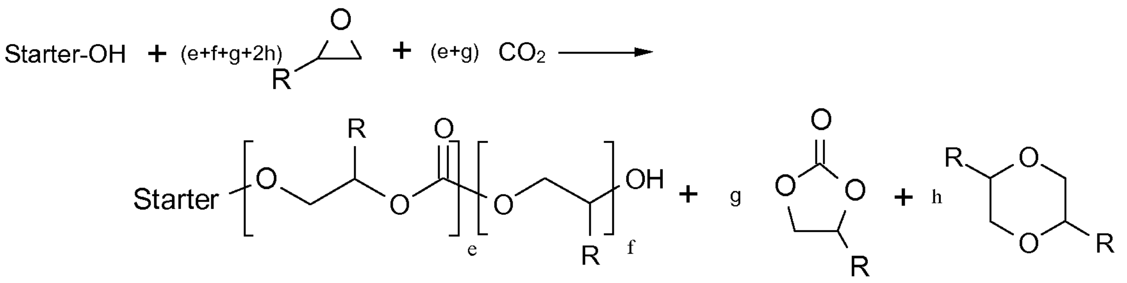
(I)

EP-A 0 222 453 offenbart ein Verfahren zur Herstellung von Polycarbonaten aus Alkylenoxiden und Kohlendioxid unter Verwendung eines Katalysatorsystems aus DMC-Katalysator und einem Co-Katalysator wie Zinksulfat. Dabei wird die Polymerisation initiiert, indem einmalig ein Teil des Alkylenoxids mit dem Katalysatorsystem in Kontakt gebracht wird. Erst danach werden die Restmenge Alkylenoxid und das Kohlendioxid simultan zudosiert. Die bei EP-A 0 222 453 für den Aktivierungsschritt in den Beispielen 1 bis 7 angegebene Menge von 60 Gew.-% Alkylenoxidverbindung relativ zur H-funktionellen Starterverbindung ist hoch und hat den Nachteil, dass dies für großtechnische Anwendungen aufgrund der hohen Exothermie der Homo-Polymerisation von Alkylenoxidverbindungen ein gewisses Sicherheitsrisiko darstellt.

WO-A 2003/029325 offenbart ein Verfahren zur Herstellung von hochmolekularen aliphatischen Polyethercarbonatpolyolen (gewichtsmittleres Molekulargewicht größer als 30000 g/mol), bei dem ein Katalysator aus der Gruppe bestehend aus Zinkcarboxylat und Multimetallcyanidverbindung eingesetzt wird, der wasserfrei ist und der zunächst mit zumindest einer Teilmenge des Kohlendioxids in Kontakt gebracht wird, bevor man das Alkylenoxid zufügt. $CO_2$-Enddrücke von bis zu 150 bar stellen sehr hohe Anforderungen an den Reaktor sowie an die Sicherheit. Selbst durch den überaus hohen Druck von 150 bar wurden nur ca. 33 Gew.-% $CO_2$ bis maximal 42 Gew.- % $CO_2$ eingebaut. Die dargelegten Beispiele beschreiben die Verwendung eines Lösemittels (Toluol), das nach der Reaktion wieder thermisch abgetrennt werden muss, was zu erhöhtem Zeit- und Kostenaufwand führt. Des Weiteren weisen die Polymere mit einer Uneinheitlichkeit bzw. Polydispersität von 2,7 oder mehr eine sehr breite Molmassenverteilung auf.

WO-A 2008/058913 offenbart ein Verfahren zur Herstellung von Polyurethan-Weichschaumstoffen mit einer verringerten Emission von organischen Stoffen, wobei die eingesetzten Polyethercarbonatpolyole am Kettenende einen Block aus reinen Alkylenoxideinheiten aufweisen.

EP-A 2 530 101 offenbart ein Verfahren zur Herstellung von Polyethercarbonatpolyolen, in denen mindestens ein Alkylenoxid und Kohlendioxid an eine H-funktionelle Startersubstanz in Gegenwart eines DMC-Katalysators reagieren. EP-A 2 530 101 offenbart aber nicht, wie Polyethercarbonatpolyole gegenüber thermischer Belastung stabilisiert werden können, so dass nach thermischer Belastung ein möglichst geringer Gehalt an Dioxanen erhalten wird.

US-A 4 145 525 offenbart ein Verfahren zur thermischen Stabilisierung von Polyalkylencarbonatpolyolen. Die in US-A 4 145 525 offenbarten Polyalkylencarbonatpolyole weisen alternierende Einheiten aus Alkylenoxid und Kohlendioxid auf. Gemäß der Lehre von US-A 4 145 525 wird zumindest ein Teil der endständigen Hydroxylgruppen des Polyalkylencarbonatpolyols mit einer gegenüber Hydroxyl-Gruppen reaktiven Phosphor-Verbindung umgesetzt unter

Bildung einer Sauerstoff-Phosphor-Verbindung. US-A 4 145 525 offenbart keine Polyethercarbonatpolyole. Aus US-A 4 145 525 erhält der Fachmann aber keine Lehre, wie Polyethercarbonatpolyole mit einem möglichst niedrigen Gehalt an Dioxanen durch Anlagerung von ein oder mehreren Alkylenoxiden und Kohlendioxid an eine oder mehrere H-funktionelle Startersubstanzen in Gegenwart eines Doppelmetallcyanid-Katalysators hergestellt werden können.

Es war Aufgabe der vorliegenden Erfindung, ein Verfahren zur Herstellung von Polyethercarbonatpolyolen bereitzustellen, wobei das Verfahren zu einem Produkt führt, welches nach thermischer Belastung einen möglichst geringen Gehalt an Dioxanen aufweist. Insbesondere war es Aufgabe, Polyethercarbonatpolyole zur Verfügung zu stellen, die sowohl nach thermischer Belastung einen möglichst geringen Gehalt an Dioxanen aufweisen wie auch zur Herstellung von Polyurethan-Weichschaumstoffen geeignet sind.

Überraschend wurde gefunden, dass Polyethercarbonatpolyole, die nach thermischer Belastung einen gegenüber dem Stand der Technik niedrigeren Gehalt an Dioxanen aufweisen, erhalten werden durch ein Verfahren zur Herstellung von Polyethercarbonatpolyolen,

(i) wobei ein oder mehrere Alkylenoxid(e) und Kohlendioxid an eine oder mehrere H-funktionelle Startersubstanz(en) in Gegenwart eines Doppelmetallcyanid-Katalysators angelagert werden, wobei ein Reaktionsgemisch enthaltend das Polyethercarbonatpolyol erhalten wird,
dadurch gekennzeichnet, dass
(ii) zu dem erhaltenen Reaktionsgemisch enthaltend das Polyethercarbonatpolyol mindestens eine Komponente K gegeben wird, wobei Komponente K ausgewählt ist aus mindestens einer Verbindung aus der Gruppe bestehend aus Phosphorsäure, Phosphorsäuredibutylester, Phosphorsäuretriethylester, Phosphonsäure und $(NH_4)_2HPO_4$.

Optional kann in dem aus Schritt (i) resultierenden Polyethercarbonatpolyol vor Schritt (ii) bei einer Temperatur von 80°C bis 200°C thermisch der Gehalt an leicht flüchtigen Bestandteilen reduziert werden.

Die so erhaltenen Polyethercarbonatpolyole weisen darüber hinaus nach thermischer Aufarbeitung einen gegenüber dem Stand der Technik niedrigeren Gehalt an Dioxanen auf. Gegenstand der Erfindung ist somit auch ein Verfahren, wobei
(iii) in dem Reaktionsgemisch aus Schritt (ii) bei einer Temperatur von 80°C bis 200 °C thermisch der Gehalt an leicht flüchtigen Bestandteilen reduziert wird.

Charakteristisch für die erfindungsgemäß hergestellten Polyethercarbonatpolyole ist, dass diese zwischen den Carbonatgruppen auch Ethergruppen enthalten. In Bezug auf Formel (Ia) bedeutet dies, dass das Verhältnis von e/f bevorzugt von 2 : 1 bis 1 : 20, besonders bevorzugt von 1,5 : 1 bis 1 : 10 beträgt.

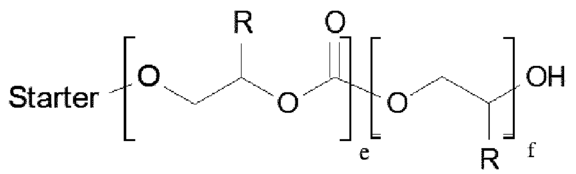 (Ia)

Thermische Belastung beim Verfahren zur Herstellung von Polyethercarbonatpolyolen tritt typischerweise bei der Aufreinigung durch thermische Verfahren wie beispielsweise Dünnschichtverdampfung auf. Bei der thermischen Belastung von Polyethercarbonatpolyolen kann es vorkommen, dass sich die Dioxane aus den im Polyethercarbonatpolyol enthaltenen Ether-Ketten bilden.

Optional kann sich als Schritt (iv) eine weitere Zugabe mindestens einer Komponente K anschließen, um das erhaltene Produkt auf einen gewünschten Gehalt an einer oder mehrerer bestimmten Komponenten K zu bringen.

Beispielsweise wird Komponente K in Schritt (ii) und ggf. in Schritt (iv) in einer Menge von jeweils 20 ppm bis 1000 ppm zugegeben.

Gegenstand der Erfindung sind auch Mischungen enthaltend Polyethercarbonatpolyol und Komponente K, wobei vorzugsweise die Mischung Polyethercarbonatpolyol und Komponente K in einem Gewichtsverhältnis von 200000 : 1 bis 1000 : 1, besonders bevorzugt von 50000 : 1 bis 1000: 1 enthält.

Komponente K

Erfindungsgemäß ist Komponente K ausgewählt aus mindestens einer Verbindung aus der Gruppe bestehend aus Phosphorsäure, Phosphorsäuredibutylester, Phosphorsäuretriethylester, Phosphonsäure und $(NH_4)_2HPO_4$.

Schritt (i):

Die Anlagerung der ein oder mehreren Alkylenoxide und Kohlendioxid in Gegenwart mindestens eines DMC-Katalysators an eine oder mehrere H-funktionelle Startsubstanz(en) ("Copolymerisation") führt zu einem Reaktionsgemisch enthaltend das Polyethercarbonatpolyol und gegebenenfalls cyclisches Carbonat (vgl. Schema (I), beispielsweise entsteht im Falle der Anlagerung von Propylenoxid (R = $CH_3$) somit Propylencarbonat) sowie Dioxane (beispielsweise für R = $CH_3$ Dimethyldioxan).

Beispielsweise ist das Verfahren gemäß Schritt (i) dadurch gekennzeichnet, dass

(α) die H-funktionelle Startersubstanz oder ein Gemisch aus mindestens zwei H-funktionellen Startersubstanzen oder ein Suspensionsmittel vorgelegt und gegebenenfalls Wasser und/oder andere leicht flüchtige Verbindungen durch erhöhte Temperatur und/oder reduziertem Druck entfernt werden ("Trocknung"), wobei der DMC-Katalysator der H-funktionellen Startersubstanz oder dem Gemisch von mindestens zwei H-funktionellen Startersubstanzen oder dem Suspensionsmittel vor oder nach der Trocknung zugesetzt wird,

(β) zur Aktivierung eine Teilmenge (bezogen auf die Gesamtmenge der bei der Aktivierung und Copolymerisation eingesetzten Menge an Alkylenoxiden) von Alkylenoxid zu der aus Schritt (α) resultierenden Mischung zugesetzt wird, wobei diese Zugabe einer Teilmenge an Alkylenoxid gegebenenfalls in Gegenwart von $CO_2$ erfolgen kann, und wobei dann die aufgrund der folgenden exothermen chemischen Reaktion auftretende Temperaturspitze ("Hotspot") und/oder ein Druckabfall im Reaktor jeweils abgewartet wird, und wobei der Schritt (β) zur Aktivierung auch mehrfach erfolgen kann,

(γ) Alkylenoxid, Kohlendioxid und gegebenenfalls eine oder mehrere H-funktionelle Startersubstanz(en) zu der aus Schritt (β) resultierenden Mischung zugesetzt werden,

wobei wenigstens in einem der Schritte (α) oder (γ) mindestens eine H-funktionelle Startersubstanz zugesetzt wird.

Die gegebenenfalls eingesetzten Suspensionsmittel enthalten keine H-funktionellen Gruppen. Als Suspensionsmittel sind alle polar-aprotischen, schwach polar-aprotischen und unpolar-aprotischen Lösungsmittel geeignet, die jeweils keine H-funktionellen Gruppen enthalten. Als Suspensionsmittel kann auch eine Mischung aus zwei oder mehrerer dieser Suspensionsmittel eingesetzt werden. Beispielhaft seien an dieser Stelle folgende polar-aprotischen Suspensionsmittel genannt: 4-Methyl-2-oxo-1,3-dioxolan (im Folgenden auch als cyclisches Propylencarbonat oder cPC bezeichnet), 1,3-Dioxolan-2-on (im Folgenden auch als cyclisches Ethylencarbonat oder cEC bezeichnet), Aceton, Methylethylketon, Acetonitril, Nitromethan, Dimethyl¬sulf¬oxid, Sulfolan, Dimethylformamid, Dimethylacetamid und N-Methylpyrrolidon. Zu der Gruppe der unpolar- und schwach polar-aprotischen Suspensionsmittel zählen z.B. Ether, wie z.B. Dioxan, Diethylether, Methyl-tert-Butylether und Tetrahydrofuran, Ester, wie z.B. Essigsäureethylester und Essigsäurebutylester, Kohlenwasserstoffe, wie z.B. Pentan, n-Hexan, Benzol und alkylierte Benzolderivate (z.B. Toluol, Xylol, Ethylbenzol) und chlorierte Kohlen¬wasserstoffe, wie z.B., Chloroform, Chlorbenzol, Dichlorbenzol und Tetra¬chlor¬kohlenstoff. Bevorzugt als Suspensionsmittel werden 4-Methyl-2-oxo-1,3-dioxolan, 1,3-Dioxolan-2-on, Toluol, Xylol, Ethylbenzol, Chlorbenzol und Dichlorbenzol sowie Mischungen zweier oder mehrerer dieser Suspensionsmittel eingesetzt, besonders bevorzugt ist 4-Methyl-2-oxo-1,3-dioxolan und 1,3-Dioxolan-2-on oder eine Mischung aus 4-Methyl-2-oxo-1,3-dioxolan und 1,3-Dioxolan-2-on.

Allgemein können für das erfindungsgemäße Verfahren Alkylenoxide (Epoxide) mit 2-24 Kohlenstoffatomen eingesetzt werden. Bei den Alkylenoxiden mit 2-24 Kohlenstoffatomen handelt es sich beispielsweise um eine oder mehrere Verbindungen ausgewählt aus der Gruppe bestehend aus Ethylenoxid, Propylenoxid, 1-Butenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, 1-Hexenoxid, 2,3-Hexenoxid, 3,4-Hexenoxid, 2-Methyl-1,2-pentenoxid, 4-Methyl-1,2-pentenoxid, 2-Ethyl-1,2-butenoxid, 1-Heptenoxid, 1-Octenoxid, 1-Nonenoxid, 1-Decenoxid, 1-Undecenoxid, 1-Dodecenoxid, 4-Methyl-1,2-pentenoxid, Butadienmonoxid, Isoprenmonoxid, Cyclopentenoxid, Cyclohexenoxid, Cycloheptenoxid, Cyclooctenoxid, Styroloxid, Methylstyroloxid, Pinenoxid, ein- oder mehrfach epoxidierte Fette als Mono-, Di- und Triglyceride, epoxidierte Fettsäuren, C1-C24-Ester von epoxidierten Fettsäuren, Epichlorhydrin, Glycidol, und Derivate des Glycidols wie beispielsweise Methylglycidylether, Ethylglycidylether, 2-Ethylhexylglycidylether, Allylglycidylether, Glycidylmethacrylat sowie epoxidfunktionelle Alkyoxysilane wie beispielsweise 3-Glycidyloxy¬propyl¬trimethoxysilan, 3-Glycidyloxy¬propyl¬triethoxysilan, 3-Glycidyloxypropyltripropoxysilan, 3 -Glycidyloxy¬propyl-methyl-dimethoxysilan, 3 -Glycidyloxy¬propyl-ethyldiethoxysilan, 3-Glycidyloxy¬propyltriisopropoxysilan. Vorzugsweise werden als Alkylenoxide 1-Butenoxid, Ethylenoxid und/oder Propylenoxid, insbesondere Propylenoxid eingesetzt.

Als geeignete H-funktionelle Startersubstanz ("Starter") können Verbindungen mit für die Alkoxylierung aktiven H-Atomen eingesetzt werden, die eine Molmasse von 18 bis 4500 g/mol, bevorzugt von 62 bis 500 g/mol und besonders bevorzugt von 62 bis 182 g/mol aufweisen. Die Fähigkeit zur Verwendung eines Starters mit einer niedrigen Molmasse ist ein deutlicher Vor¬teil gegenüber der Verwendung von oligomeren Startern, die mittels einer vorherigen Oxyalkylierung hergestellt sind. Insbesondere wird eine Wirtschaftlichkeit erreicht, die durch das Weglassen eines getrennten Oxyalkylierungsverfahrens ermöglicht wird.

Für die Alkoxylierung aktive Gruppen mit aktiven H-Atomen sind beispielsweise -OH, -NH2 (primäre Amine), -NH- (sekundäre Amine), -SH und -CO2H, bevorzugt sind -OH und -NH2, besonders bevorzugt ist -OH. Als H-funktionelle Startersubstanz wird beispielsweise eine oder mehrere Verbindungen ausgewählt aus der Gruppe bestehend aus ein- oder mehrwertigen Alkoholen, mehrwertigen Aminen, mehrwertigen Thiolen, Aminoalkohole, Thioalkohole, Hydroxyester, Polyetherpolyole, Polyesterpolyole, Polyesteretherpolyole, Polyethercarbonatpolyole, Polycarbonatpolyole, Polycarbonate, Polyethylenimine, Polyetheramine, Polytetrahydrofurane (z. B. PolyTHF® der BASF), Polytetrahydrofuranamine, Polyetherthiole, Polyacrylatpolyole, Ricinusöl, das Mono- oder Diglycerid von Ricinolsäure, Monoglyceride von Fettsäuren, chemisch modifizierte Mono-, Di- und/oder Triglyceride von Fettsäuren, und C1-C24 Alkyl-Fettsäureester, die im Mittel mindestens 2 OH-Gruppen pro Molekül enthalten, eingesetzt. Beispielhaft handelt es sich bei den C1-C24 Alkyl-Fettsäureester, die im Mittel mindestens 2 OH-Gruppen pro Molekül enthalten, um Handelsprodukte wie Lupranol Balance® (Fa. BASF AG), Merginol®-Typen (Fa. Hobum Oleochemicals GmbH), Sovermol®-Typen (Fa. Cognis Deutschland GmbH & Co. KG) und Soyol®TM-Typen (Fa. USSC Co.).

Als mono-H-funktionelle Startersubstanzen können Alkohole, Amine, Thiole und Carbonsäuren eingesetzt werden. Als monofunktionelle Alkohole können Verwendung finden: Methanol, Ethanol, 1-Propanol, 2-Propanol, 1-Butanol, 2-Butanol, tert-Butanol, 3-Buten-1-ol, 3-Butin-1-ol, 2-Methyl-3-buten-2-ol, 2-Methyl-3-butin-2-ol, Propagylalkohol, 2-Methyl-2-propanol, 1-tert-Butoxy-2-propanol, 1-Pentanol, 2-Pentanol, 3-Pentanol, 1-Hexanol, 2-Hexanol, 3-Hexanol, 1-Heptanol, 2-Heptanol, 3-Heptanol, 1-Octanol, 2-Octanol, 3-Octanol, 4-Octanol, Phenol, 2-Hydroxybiphenyl, 3-Hydroxybiphenyl, 4-Hydroxybiphenyl, 2-Hydroxypyridin, 3-Hydroxypyridin, 4-Hydroxypyridin. Als monofunktionelle Amine kommen in Frage: Butylamin, tert-Butylamin, Pentylamin, Hexylamin, Anilin, Aziridin, Pyrrolidin, Piperidin, Morpholin. Als monofunktionelle Thiole können verwendet werden: Ethanthiol, 1-Propanthiol, 2-Propanthiol, 1-Butanthiol, 3-Methyl-1-butanthiol, 2-Buten-1-thiol, Thiophenol. Als mono funktionelle Carbonsäuren seien genannt: Ameisensäure, Essigsäure, Propionsäure, Buttersäure, Fettsäuren wie Stearinsäure, Palmitinsäure, Ölsäure, Linolsäure, Linolensäure, Benzoesäure, Acrylsäure.

Als H-funktionelle Startersubstanzen geeignete mehrwertige Alkohole sind beispielsweise zweiwertige Alkohole (wie beispielsweise Ethylenglykol, Diethylenglykol, Propylenglykol, Dipropylenglykol, 1,3-Propandiol, 1,4-Butandiol, 1,4-Butendiol, 1,4-Butindiol, Neopentylglykol, 1,5-Pentandiol, Methylpentandiole (wie beispielweise 3-Methyl-1,5-pentandiol), 1,6-Hexandiol, 1,8-Octandiol, 1,10-Decandiol, 1,12-Dodecandiol, Bis-(hydroxymethyl)-cyclohexane (wie beispielweise 1,4-Bis-(hydroxymethyl)cyclohexan), Triethylenglykol, Tetraethylenglykol, Polyethylenglykole, Dipropylenglykol, Tripropylenglykol, Polypropylenglykole, Dibutylenglykol und Polybutylenglykole); dreiwertige Alkohole (wie beispielsweise Trimethylolpropan, Glycerin, Trishydroxyethylisocyanurat, Rizinusöl); vierwertige Alkohole (wie beispielsweise Pentaerythrit); Polyalkohole (wie beispielsweise Sorbit, Hexit, Saccharose, Stärke, Stärkehydrolysate, Cellulose, Cellulosehydrolysate, hydroxyfunktionalisierte Fette und Öle, insbesondere Rizinusöl), sowie alle Modifizierungsprodukte dieser zuvorgenannten Alkohole mit unterschiedlichen Mengen an ε-Caprolacton.

Die H-funktionellen Startersubstanzen können auch aus der Substanzklasse der Polyetherpolyole ausgewählt sein, die ein Molekulargewicht Mn im Bereich von 18 bis 4500 g/mol und eine Funktionalität von 2 bis 3 aufweisen. Bevorzugt sind Polyetherpolyole, die aus sich wiederholenden Ethylenoxid- und Propylenoxideinheiten aufgebaut sind, bevorzugt mit einem Anteil von 35 bis 100% Propylenoxideinheiten, besonders bevorzugt mit einem Anteil von 50 bis 100% Propylenoxideinheiten. Hierbei kann es sich um statistische Copolymere, Gradienten-Copolymere, alternierende oder Blockcopolymere aus Ethylenoxid und Propylenoxid handeln.

Die H-funktionellen Startersubstanzen können auch aus der Substanzklasse der Polyesterpolyole ausgewählt sein. Als Polyesterpolyole werden mindestens difunktionelle Polyester eingesetzt. Bevorzugt bestehen Polyesterpolyole aus alternierenden Säure- und Alkoholeinheiten. Als Säurekomponenten werden z. B. Bernsteinsäure, Maleinsäure, Maleinsäureanhydrid, Adipinsäure, Phthalsäureanhydrid, Phthalsäure, Isophthalsäure, Terephthalsäure, Tetrahydrophtalsäure, Tetrahydrophthalsäureanhydrid, Hexahydrophthalsäureanhydrid oder Gemische aus den genannten Säuren und/oder Anhydriden eingesetzt. Als Alkoholkomponenten werden z. B. Ethandiol, 1,2-Propandiol, 1,3-Propandiol, 1,4-Butandiol, 1,5-Pentandiol, Neopentylglykol, 1,6-Hexandiol, 1,4-Bis-(hydroxymethyl)-cyclohexan, Diethylenglykol, Dipropylenglykol, Trimethylolpropan, Glycerin, Pentaerythrit oder Gemische aus den genannten Alkoholen verwendet. Werden als Alkoholkomponente zweiwertige oder mehrwertige Polyetherpolyole eingesetzt, so erhält man Polyesteretherpolyole, die ebenfalls als Startersubstanzen zur Herstellung der Polyethercarbonatpolyole dienen können.

Des Weiteren können als H-funktionelle Startersubstanzen Polycarbonatdiole eingesetzt werden, die beispielsweise durch Umsetzung von Phosgen, Dimethylcarbonat, Diethylcarbonat oder Diphenylcarbonat und difunktionellen Alkoholen oder Polyesterpolyolen oder Polyetherpolyolen hergestellt werden. Beispiele zu Polycarbonaten finden sich z. B. in der EP-A 1359177.

In einer weiteren Ausführungsform der Erfindung können Polyethercarbonatpolyole als H-funktionelle Startersubstanzen eingesetzt werden. Insbesondere werden Polyethercarbonatpolyole, die nach dem hier beschriebenen erfindungsgemäßen Verfahrensschritt (i) erhältlich sind, eingesetzt. Diese als H-funktionelle Startersubstanzen eingesetzten Polyethercarbonatpolyole werden hierzu in einem separaten Reaktionsschritt zuvor hergestellt.

Die H-funktionellen Startersubstanzen weisen im Allgemeinen eine Funktionalität (d.h. Anzahl an für die Polymerisation aktiven H-Atomen pro Molekül) von 1 bis 8, bevorzugt von 2 oder 3 auf. Die H-funktionellen Startersubstanzen werden entweder einzeln oder als Gemisch aus mindestens zwei H-funktionellen Startersubstanzen eingesetzt.

Besonders bevorzugt handelt es sich bei den H-funktionellen Startersubstanzen um eine oder mehrere Verbindungen ausgewählt aus der Gruppe bestehend aus Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, 1,8-Octandiol, Diethylenglykol, Dipropylenglykol, Glycerin, Trimethylolpropan, Pentaerythrit, Sorbitol und Polyetherpolyole mit einem Molekulargewicht Mn im Bereich von 150 bis 4500 g/mol und einer Funktionalität von 2 bis 3.

Die Herstellung der Polyethercarbonatpolyole erfolgt durch katalytische Anlagerung von Kohlendioxid und Alkylenoxiden an H-funktionelle Startersubstanzen. Unter "H-funktionell" wird im Sinne der Erfindung die Anzahl an für die Alkoxylierung aktiven H-Atomen pro Molekül der Startersubstanz verstanden.

Zu Schritt ($\alpha$):

Vorzugsweise wird in Schritt ($\alpha$) ein Suspensionsmittel, das keine H-funktionellen Gruppen enthält, im Reaktor gegebenenfalls gemeinsam mit DMC-Katalysator vorgelegt, und dabei wird keine H-funktionelle Startersubstanz im Reaktor vorgelegt. Alternativ können auch in Schritt ($\alpha$) ein Suspensionsmittel, das keine H-funktionellen Gruppen enthält, und zusätzlich eine Teilmenge der H-funktionellen Startersubstanz(en) sowie gegebenenfalls DMC-Katalysator im Reaktor vorgelegt werden, oder es können auch in Schritt ($\alpha$) eine Teilmenge der H-funktionellen Startersubstanz(en) sowie gegebenenfalls DMC-Katalysator im Reaktor vorgelegt werden. Weiterhin können auch in Schritt ($\alpha$) die Gesamtmenge der H-funktionellen Startersubstanz(en) sowie gegebenenfalls DMC-Katalysator im Reaktor vorgelegt werden.

Der DMC-Katalysator wird vorzugsweise in einer Menge eingesetzt, so dass der Gehalt an DMC-Katalysator im gemäß Schritt (i) resultierenden Reaktionsprodukt 10 bis 10000 ppm, besonders bevorzugt 20 bis 5000 ppm und höchst bevorzugt 50 bis 500 ppm beträgt.

In einer bevorzugten Ausführungsform wird in das resultierende Gemisch aus DMC-Katalysator mit Suspensionsmittel und/oder H-funktioneller Startersubstanz bei einer Temperatur von 90 bis 150°C, besonders bevorzugt von 100 bis 140°C Inertgas (beispielsweise Argon oder Stickstoff), ein Inertgas-Kohlendioxid-Gemisch oder Kohlendioxid eingeleitet und gleichzeitig ein reduzierter Druck (absolut) von 10 mbar bis 800 mbar, besonders bevorzugt von 50 mbar bis 200 mbar angelegt.

In einer alternativen bevorzugten Ausführungsform wird das resultierende Gemisch aus DMC-Katalysator mit Suspensionsmittel und/oder H-funktioneller Startersubstanz bei einer Temperatur von 90 bis 150°C, besonders bevorzugt von 100 bis 140°C mindestens einmal, vorzugsweise dreimal mit 1,5 bar bis 10 bar (absolut), besonders bevorzugt 3 bar bis 6 bar (absolut) eines Inertgases (beispielsweise Argon oder Stickstoff), eines Inertgas-Kohlendioxid-Gemisches oder Kohlendioxid beaufschlagt und jeweils anschließend der Überdruck auf ca. 1 bar (absolut) reduziert.

Der DMC-Katalysator kann beispielsweise in fester Form oder als Suspension in einem oder mehreren Suspensionsmittel(n) oder als Suspension in einer oder mehreren H-funktionellen Startersubstanz(en) zugegeben werden.

In einer weiteren bevorzugten Ausführungsform wird in Schritt ($\alpha$)

($\alpha$-I) Suspensionsmittel und/oder eine Teilmenge oder die Gesamtmenge an H-funktioneller Startersubstanz vorgelegt und

($\alpha$-II) die Temperatur des Suspensionsmittels und/oder der H-funktionellen Startersubstanz auf 50 bis 200°C, bevorzugt 80 bis 160°C, besonders bevorzugt 100 bis 140°C gebracht und/oder der Druck im Reaktor auf weniger als 500 mbar, bevorzugt 5 mbar bis 100 mbar erniedrigt, wobei gegebenenfalls ein Inertgas-Strom (beispielsweise von Argon oder Stickstoff), ein Inertgas-Kohlendioxid-Strom oder ein Kohlendioxid-Strom durch den Reaktor geleitet wird,

wobei der Doppelmetallcyanid-Katalysator zum Suspensionsmittel und/oder zur H-funktionellen Startersubstanz in Schritt ($\alpha$-I) oder unmittelbar anschließend in Schritt ($\alpha$-II) zugesetzt wird, und wobei das Suspensionsmittel keine H-funktionellen Gruppen enthält.

Zu Schritt ($\beta$):

Schritt ($\beta$) dient der Aktivierung des DMC-Katalysators. Dieser Schritt kann gegebenenfalls unter Inertgasatmosphäre, unter einer Atmosphäre aus Inertgas-Kohlendioxid-Gemisch oder unter einer Kohlendioxid-Atmosphäre durchgeführt werden. Als Aktivierung im Sinne dieser Erfindung wird ein Schritt bezeichnet, bei dem eine Teilmenge Alkylenoxid bei Temperaturen von 90 bis 150°C zur DMC-Katalysator-Suspension zugegeben wird und dann die Zugabe des Alkylenoxids unterbrochen wird, wobei aufgrund einer folgenden exothermen chemischen Reaktion eine Wärmeentwicklung, die zu einer Temperaturspitze ("Hotspot") führen kann, sowie aufgrund der Umsetzung von Alkylenoxid und gegebenenfalls CO2 ein Druckabfall im Reaktor beobachtet wird. Der Verfahrensschritt der Aktivierung ist die Zeitspanne

von der Zugabe der Teilmenge an Alkylenoxid, gegebenenfalls in Gegenwart von CO2, zum DMC-Katalysator bis zum Auftreten der Wärmeentwicklung. Gegebenenfalls kann die Teilmenge Alkylenoxid in mehreren Einzelschritten, gegebenenfalls in Gegenwart von CO2, zum DMC-Katalysator gegeben werden und dann jeweils die Zugabe des Alkylenoxids unterbrochen werden. Im diesem Fall umfasst der Verfahrensschritt der Aktivierung die Zeitspanne von der Zugabe der ersten Teilmenge an Alkylenoxid, gegebenenfalls in Gegenwart von CO2, zum DMC-Katalysator bis zum Auftreten der Wärmeentwicklung nach Zugabe der letzten Teilmenge an Alkylenoxid. Im Allgemeinen kann dem Aktivierungsschritt ein Schritt zum Trocknen des DMC-Katalysators und ggf. der H-funktionellen Startersubstanz bei erhöhter Temperatur und/oder reduziertem Druck, gegebenenfalls unter Durchleiten eines Inertgases durch die Reaktionsmischung, vorgelagert sein.

Die Dosierung eines oder mehrerer Alkylenoxide (und gegebenenfalls des Kohlendioxids) kann prinzipiell in unterschiedlicher Weise erfolgen. Der Start der Dosierung kann aus dem Vakuum heraus oder bei einem zuvor gewählten Vordruck erfolgen. Der Vordruck wird bevorzugt durch Einleiten eines Inertgases (wie beispielsweise Stickstoff oder Argon) oder von Kohlendioxid eingestellt, wobei der Druck(absolut) 5 mbar bis 100 bar, vorzugsweise 10 mbar bis 50 bar und bevorzugt 20 mbar bis 50 bar beträgt.

In einer bevorzugten Ausführungsform beträgt die bei der Aktivierung in Schritt (β) eingesetzte Menge von einem oder mehreren Alkylenoxiden 0,1 bis 25,0 Gew.-%, bevorzugt 1,0 bis 20,0 Gew.-%, besonders bevorzugt 2,0 bis 16,0 Gew.-% (bezogen auf die im Schritt (α) eingesetzte Menge an Suspensionsmittel und/oder H-funktioneller Startersubstanz). Das Alkylenoxid kann in einem Schritt oder portionsweise in mehreren Teilmengen zugegeben werden. Bevorzugt wird nach Zugabe einer Teilmenge an Alkylenoxid die Zugabe des Alkylenoxids bis zum Auftreten der Wärmeentwicklung unterbrochen und erst dann die nächste Teilmenge an Alkylenoxid zugegeben. Bevorzugt ist auch eine zweistufige Aktivierung (Schritt β), wobei

(β1) in einer ersten Aktivierungsstufe die Zugabe einer ersten Teilmenge von Alkylenoxid unter Inertgasatmosphäre erfolgt und

(β2) in einer zweiten Aktivierungsstufe die Zugabe einer zweiten Teilmenge von Alkylenoxid unter Kohlendioxid-Atmosphäre erfolgt.

Zu Schritt (γ):

Für das erfindungsgemäße Verfahren hat sich gezeigt, dass Schritt (γ) vorteilhafterweise bei 50 bis 150°C, bevorzugt bei 60 bis 145°C, besonders bevorzugt bei 70 bis 140°C und ganz besonders bevorzugt bei 90 bis 130°C durchgeführt wird. Unterhalb von 50°C läuft die Reaktion unter Bildung eines Polyethercarbonatpolyols nur sehr langsam ab. Bei Temperaturen oberhalb von 150°C steigt die Menge an unerwünschten Nebenprodukten stark an.

Die Dosierung eines oder mehrerer Alkylenoxide und des Kohlendioxids kann simultan, wechselweise oder sequentiell erfolgen, wobei die gesamte Kohlendioxidmenge auf einmal oder dosiert über die Reaktionszeit zugegeben werden kann. Es ist möglich, während der Zugabe des Alkylenoxids den CO2-Druck allmählich oder schrittweise zu steigern oder zu senken oder gleich zu lassen. Vorzugsweise wird der Gesamtdruck während der Reaktion durch eine Nachdosierung an Kohlendioxid konstant gehalten. Die Dosierung eines oder mehrerer Alkylenoxide erfolgt simultan, wechselweise oder sequentiell zur Kohlendioxid Dosierung. Es ist möglich, das Alkylenoxid mit konstanter Dosierrate zu dosieren oder die Dosierrate allmählich oder schrittweise zu steigern oder zu senken oder das Alkylenoxid portionsweise zuzugeben. Bevorzugt wird das Alkylenoxid mit konstanter Dosierrate dem Reaktionsgemisch zugegeben. Werden mehrere Alkylenoxide zur Synthese der Polyethercarbonatpolyole eingesetzt, so können die Alkylenoxide einzeln oder als Gemisch dosiert werden. Die Dosierung der Alkylenoxide kann simultan, wechselweise oder sequentiell über jeweils separate Dosierungen (Zugaben) erfolgen oder über eine oder mehrere Dosierungen, wobei die Alkylenoxide einzeln oder als Gemisch dosiert werden können. Über die Art und/oder Reihenfolge der Dosierung der Alkylenoxide und/oder des Kohlendioxids ist es möglich, statistische, alternierende, blockartige oder gradientenartige Polyethercarbonatpolyole zu syn¬thetisieren.

Vorzugsweise wird ein Überschuss an Kohlendioxid bezogen auf die berechnete Menge an eingebautem Kohlendioxid im Polyethercarbonatpolyol eingesetzt, da bedingt durch die Reaktionsträgheit von Kohlendioxid ein Überschuss von Kohlendioxid von Vorteil ist. Die Menge an Kohlendioxid kann über den Gesamtdruck bei den jeweiligen Reaktionsbedingungen festgelegt werden. Als Gesamtdruck (absolut) hat sich der Bereich von 0,01 bis 120 bar, bevorzugt 0,1 bis 110 bar, besonders bevorzugt von 1 bis 100 bar für die Copolymerisation zur Herstellung der Polyethercarbonatpolyole als vorteilhaft erwiesen. Es ist möglich, das Kohlendioxid kontinuierlich oder diskontinuierlich zuzuführen. Dies hängt davon ab, wie schnell die Alkylenoxide und das CO2 verbraucht werden und ob das Produkt gegebenenfalls CO2-freie Polyether-Blöcke oder Blöcke mit unterschiedlichem CO2-Gehalt enthalten soll. Die Menge des Kohlendioxids (angegeben als Druck) kann bei der Zugabe der Alkylenoxide ebenso variieren. Je nach den gewählten Reaktionsbedingungen ist es möglich, das CO2 im gasförmigen, flüssigen oder überkritischen Zustand in den Reaktor einzuleiten. CO2 kann auch als Feststoff in den Reaktor gegeben werden und dann unter den gewählten Reaktionsbedingungen in

den gasförmigen, gelösten, flüssigen und/oder überkritischen Zustand übergehen.

Bei einem Verfahren mit Dosierung einer oder mehrerer H-funktioneller Startersubstanz(en) in Schritt (γ) kann die Dosierung einer oder mehrerer H-funktioneller Startersubstanz(en), eines oder mehrerer Alkylenoxid(e) und gegebenenfalls auch des Kohlendioxids simultan oder sequentiell (portionsweise) erfolgen, beispielsweise kann die gesamte Kohlendioxidmenge, die Menge an H-funktionellen Startersubstanzen und/oder die in Schritt (γ) dosierte Menge an Alkylenoxiden auf einmal oder kontinuierlich zugegeben werden. Der hier verwendete Begriff "kontinuierlich" kann als Modus der Zugabe eines Reaktanden so definiert werden, dass eine für die Copolymerisation wirksame Konzentration des Reaktanden aufrechterhalten wird, d.h. beispielsweise kann die Dosierung mit einer konstanten Dosierrate, mit einer variierenden Dosierrate oder portionsweise erfolgen.

Es ist möglich, während der Zugabe des Alkylenoxids und/oder der H-funktionellen Startersubstanzen den $CO_2$-Druck allmählich oder schrittweise zu steigern oder zu senken oder gleich zu lassen. Vorzugsweise wird der Gesamtdruck während der Reaktion durch eine Nachdosierung an Kohlendioxid konstant gehalten. Die Dosierung eines oder mehrerer Alkylenoxid(e) und/oder der einen oder mehreren H-funktionellen Startersubstanz(en) erfolgt simultan oder sequentiell zur Kohlendioxid-Dosierung. Es ist möglich, das Alkylenoxid mit konstanter Dosierrate zu dosieren oder die Dosierrate allmählich oder schrittweise zu steigern oder zu senken oder das Alkylenoxid portionsweise zuzugeben. Bevorzugt wird das Alkylenoxid mit konstanter Dosierrate dem Reaktionsgemisch zugegeben. Werden mehrere Alkylenoxide zur Synthese der Polyethercarbonatpolyole eingesetzt, so können die Alkylenoxide einzeln oder als Gemisch dosiert werden. Die Dosierung der Alkylenoxide bzw. der H-funktionellen Startersubstanzen kann simultan oder sequentiell über jeweils separate Dosierungen (Zugaben) erfolgen oder über eine oder mehrere Dosierungen, wobei die Alkylenoxide bzw. die H-funktionellen Startersubstanzen einzeln oder als Gemisch dosiert werden können. Über die Art und/oder Reihenfolge der Dosierung der H-funktionellen Startersubstanzen, der Alkylenoxide und/oder des Kohlendioxids ist es möglich, statistische, alternierende, blockartige oder gradientenartige Polyethercarbonatpolyole zu syn¬thetisieren.

In einer bevorzugten Ausführungsform wird in Schritt (γ) die Dosierung der einen oder mehreren H-funktionellen Startersubstanz(en) zeitlich vor der Zugabe des Alkylenoxids beendet.

Eine bevorzugte Ausführungsform des erfindungsgemäßen Verfahrens ist unter anderem dadurch gekennzeichnet, dass in Schritt (γ) die Gesamtmenge der einen oder mehreren H-funktionellen Startersubstanz(en) zugegeben wird, also in Schritt (α) ein Suspensionsmittel eingesetzt wird. Diese Zugabe kann mit einer konstanten Dosierrate, mit einer variierenden Dosierrate oder portionsweise erfolgen.

Bevorzugt werden die Polyethercarbonatpolyole in einem kontinuierlichen Verfahren hergestellt, das sowohl eine kontinuierliche Copolymerisation als auch eine kontinuierliche Zugabe der einen oder mehreren H-funktionellen Startersubstanz(en) umfasst. Gegenstand der Erfindung ist daher auch ein Verfahren, wobei in Schritt (γ) eine oder mehrere H-funktionelle Startersubstanz(en), ein oder mehrere Alkylenoxid(e) sowie DMC-Katalysator in Gegenwart von Kohlendioxid ("Copolymerisation") kontinuierlich in den Reaktor dosiert werden und wobei das resultierende Reaktionsgemisch (enthaltend das Reaktionsprodukt) kontinuierlich aus dem Reaktor entfernt wird. Vorzugsweise wird dabei in Schritt (γ) der DMC-Katalysator, welcher in H-funktioneller Startersubstanz suspendiert wurde, kontinuierlich zugegeben. Die Dosierung des Alkylenoxids, der H-funktionellen Startersubstanz und des DMC-Katalysators kann über separate oder gemeinsame Dosierstellen erfolgen. In einer bevorzugten Ausführungsform werden das Alkylenoxid und die H-funktionelle Startersubstanz über separate Dosierstellen kontinuierlich dem Reaktionsgemisch zugeführt. Diese Zugabe der einen oder mehreren H-funktionellen Startersubstanz(en) kann als kontinuierliche Zudosierung in den Reaktor oder portionsweise erfolgen.

Beispielsweise wird für das kontinuierliche Verfahren zur Herstellung der Polyethercarbonatpolyole gemäß den Schritten (α) und (β) eine aktivierte DMC-Katalysator-Suspensionsmittel-Mischung hergestellt, dann werden gemäß Schritt (γ)

(γ1) jeweils eine Teilmenge an einer oder mehreren H-funktionellen Startersubstanz(en), einem oder mehreren Alkylenoxid(en) und Kohlendioxid zudosiert zum Initiieren der Copolymerisation, und

(γ2) während des Fortschreitens der Copolymerisation jeweils die verbleibende Menge an DMC-Katalysator, einer oder mehreren Startersubstanz(en) und Alky¬lenoxid(en) in Gegenwart von Kohlendioxid kontinuierlich zudosiert, wobei gleichzeitig resultierendes Reaktionsgemisch kontinuierlich aus dem Reaktor entfernt wird.

In Schritt (γ) wird der DMC-Katalysator bevorzugt suspendiert in der H-funktionellen Startersubstanz zugegeben.

Die Schritte (α), (β) und (γ) können in demselben Reaktor oder jeweils separat in unterschiedlichen Reaktoren durchgeführt werden. Besonders bevorzugte Reaktortypen sind: Rohrreaktoren, Rührkessel, Schlaufenreaktoren.

Die Schritte (α), (β) und (γ) können in einem Rührkessel durchgeführt werden, wobei der Rührkessel je nach Ausführungsform und Betriebsweise über den Reaktormantel, innen liegende und/oder in einem Umpumpkreislauf befindliche Kühlflächen gekühlt wird. Sowohl im Semibatch-Verfahren, bei dem das Produkt erst nach Ende der Reaktion entnommen wird, als auch im kontinuierlichen Verfahren, bei dem das Produkt kontinuierlich entnommen wird, ist besonders auf die Dosiergeschwindigkeit des Alkylenoxids zu achten. Sie ist so einzustellen, dass trotz der inhibierenden Wirkung des Kohlendioxids die Alkylenoxide genügend schnell abreagieren.

In einer bevorzugten Ausführungsform wird die gemäß den Schritten (α) und (β) resultierende aktivierte DMC-Katalysator enthaltende Mischung in demselben Reaktor weiter mit einem oder mehreren Alkylenoxid(en), einer oder mehreren Startersubstanz(en) und Kohlendioxid umgesetzt. In einer weiteren bevorzugten Ausführungsform wird die gemäß den Schritten (α) und (β) resultierende aktivierte DMC-Katalysator enthaltende Mischung in einem anderen Reaktionsbehältnis (beispielsweise einem Rührkessel, Rohrreaktor oder Schlaufenreaktor) weiter mit Alkylenoxiden, einer oder mehreren Startersubstanz(en) und Kohlendioxid umgesetzt.

Bei Reaktionsführung in einem Rohrreaktor wird die gemäß den Schritten (α) und (β) resultierende aktivierte DMC-Katalysator enthaltende Mischung, eine oder mehrere H-funktionelle Startersubstanz(en), ein oder mehrere Alkylenoxid(e) und Kohlendioxid kontinuierlich durch ein Rohr gepumpt. Die molaren Verhältnisse der Reaktionspartner variieren je nach gewünschtem Polymer. In einer bevorzugten Ausführungsform wird hierbei Kohlendioxid in seiner flüssigen oder überkritischen Form zudosiert, um eine optimale Mischbarkeit der Komponenten zu ermöglichen. Vorteilhafterweise werden Mischelemente zur besseren Durchmischung der Reaktionspartner eingebaut, wie sie zum Beispiel von der Firma Ehrfeld Mikrotechnik BTS GmbH vertrieben werden, oder Mischer-Wärmetauscherelemente, die gleichzeitig die Durchmischung und Wärmeabfuhr verbessern.

Schlaufenreaktoren können ebenfalls zur Durchführung der Schritte (α), (β) und (γ) verwendet werden. Hierunter fallen im Allgemeinen Reaktoren mit Stoffrückführung, wie beispielsweise ein Strahlschlaufenreaktor, der auch kontinuierlich betrieben werden kann, oder ein schlaufenförmig ausgelegter Rohrreaktor mit geeigneten Vorrichtungen für die Umwälzung der Reaktionsmischung oder eine Schlaufe von mehreren hintereinander geschalteten Rohrreaktoren. Der Einsatz eines Schlaufenreaktors ist insbesondere deshalb von Vorteil, weil hier eine Rückvermischung realisiert werden kann, so dass die Konzentration an freien Alkylenoxiden in der Reaktionsmischung im optimalen Bereich, vorzugsweise im Bereich > 0 bis 40 Gew.-%, besonders bevorzugt > 0 bis 25 Gew.-%, höchst bevorzugt > 0 bis 15 Gew.-% (jeweils bezogen auf das Gewicht der Reaktionsmischung) gehalten werden kann.

Vorzugsweise werden die Schritte (α) und (β) in einem ersten Reaktor durchgeführt, und das resultierende Reaktionsgemisch dann in einen zweiten Reaktor für die Copolymerisation gemäß Schritt (γ) überführt. Es ist aber auch möglich, die Schritte (α), (β) und (γ) in einem Reaktor durchzuführen.

Das Verfahren gemäß Schritt (i) kann auch so geführt werden, dass anfänglich ein gemäß den Schritten (α) und (β) in einem Suspensionsmittel aktivierter DMC-Katalysator verwendet wird, und während der Copolymerisation (γ) der DMC-Katalysator ohne vorherige Aktivierung zugesetzt wird. Ein besonders vorteilhaftes Merkmal der bevorzugten Ausführungsform der vorliegenden Erfindung ist also die Fähigkeit zur Verwendung von "frischen" DMC-Katalysatoren ohne Aktivierung für die Teilmenge an DMC-Katalysator, der kontinuierlich im Schritt (γ) zugegeben wird. Eine analog zu Schritt (β) durchzuführende Aktivierung von DMC-Katalysatoren umfasst nicht nur zusätzliche Aufmerksamkeit der Bedienungsperson, wodurch sich die Fertigungskosten erhöhen, sondern sie erfordert auch einen Druck-Reaktionsbehälter, wodurch sich auch die Kapitalkosten beim Bau einer entsprechenden Produktionsanlage erhöhen. Hier wird "frischer" DMC-Katalysator als nicht aktivierter DMC-Katalysator in fester Form oder in Form einer Aufschlämmung in einer Star¬tersubstanz oder Suspensionsmittel definiert. Die Fähigkeit des vorliegenden Verfahrens zur Verwendung von fri¬schem, nicht aktiviertem DMC-Katalysator im Schritt (γ) ermöglicht signifikante Einsparungen bei der kommerziellen Herstellung von Polyethercarbonatpolyolen und ist eine bevorzugte Ausführungsform der vorliegenden Erfindung.

Der hier verwendete Begriff "kontinuierlich" kann als Modus der Zugabe eines relevanten Katalysators oder Reaktanden so definiert werden, dass eine im Wesentlichen kontinuierliche wirksame Konzentration des DMC-Katalysators oder des Reaktanden aufrechterhalten wird. Die Katalysatorzufuhr kann echt kontinuierlich oder in relativ eng beabstandeten Inkrementen erfolgen. Gleichermaßen kann eine kontinuierliche Starterzugabe echt kontinuierlich sein oder in Inkrementen erfolgen. Es würde nicht vom vorliegenden Verfahren abweichen, einen DMC-Katalysator oder Reaktanden inkrementell so zuzugeben, dass die Konzentration der zugegebenen Ma¬terialien für einige Zeit vor der nächsten inkrementellen Zugabe im Wesentlichen auf null abfällt. Es ist jedoch bevorzugt, dass die DMC-Katalysatorkonzentration während des Hauptteils des Verlaufs der kontinuierlichen Reak¬tion im Wesentlichen auf derselben Konzentration gehalten wird und dass Startersubstanz während des Hauptteils des Copolymerisations-Verfahrens vorhanden ist. Eine inkrementelle Zugabe von DMC-Katalysator und/oder Reaktant, die die Beschaffenheit des Produkts nicht wesentlich beeinflusst, ist in demjenigen Sinn, in dem der Begriff hier verwendet wird, dennoch "kontinuierlich". Es ist beispielsweise machbar, eine Rückführungsschleife bereitzustellen, in der ein Teil der reagierenden Mischung zu einem vorherigen Punkt im Verfahren zurückgeführt wird, wodurch durch inkrementelle Zugaben bewirkte Diskontinuitäten geglättet werden.

Schritt (δ)

Optional kann in einem Schritt (δ) das in Schritt (γ) kontinuierlich entfernte Reaktionsgemisch, welches im allgemeinen einen Gehalt von 0,05 Gew.-% bis 10 Gew.-% Alkylenoxid enthält, in einen Nachreaktor überführt werden,

in dem im Wege einer Nachreaktion der Gehalt an freiem Alkylenoxid auf weniger als 0,05 Gew.-% im Reaktionsgemisch reduziert wird. Als Nachreaktor kann beispielsweise ein Rohrreaktor, ein Schlaufenreaktor oder ein Rührkessel dienen. Bevorzugt liegt der Druck in diesem Nachreaktor bei demselben Druck wie in dem Reaktionsapparat, in dem der Reaktionsschritt (γ) durchgeführt wird. Der Druck in dem nachgeschalteten Reaktor kann jedoch auch höher oder niedriger gewählt werden. In einer weiteren bevorzugten Ausführungsform wird das Kohlendioxid nach dem Reaktionsschritt (γ) ganz oder teilweise abgelassen und der nachgeschaltete Reaktor bei Normaldruck oder einem geringen Überdruck betrieben. Die Temperatur in dem nachgeschalteten Reaktor liegt bevorzugt bei 50 bis 150°C und besonders bevorzugt bei 80 bis 140°C.

Die erfindungsgemäß erhaltenen Polyethercarbonatpolyole haben beispielsweise eine Funktionalität von mindestens 1, bevorzugt von 1 bis 8, besonders bevorzugt von 1 bis 6 und ganz besonders bevorzugt von 2 bis 4. Das Molekulargewicht beträgt bevorzugt 400 bis 10000 g/mol und besonders bevorzugt 500 bis 6000 g/mol.

In dem aus Schritt (i) resultierenden Polyethercarbonatpolyol kann vor Schritt (ii) bei einer Temperatur von 80°C bis 200 °C thermisch der Gehalt an leicht flüchtigen Bestandteilen reduziert werden und/oder in dem Reaktionsgemisch aus Schritt (ii) kann bei einer Temperatur von 80°C bis 200 °C thermisch der Gehalt an leicht flüchtigen Bestandteilen reduziert werden.

Zur thermischen Reduktion der flüchtigen Bestandteile können die dem Fachmann aus dem Stand der Technik allgemein bekannten Methoden eingesetzt werden. Beispielsweise kann die thermische Reduktion der flüchtigen Bestandteile mittels Dünnschichtverdampfung, Kurzwegverdampfung oder Fallfimverdampfung erreicht werden, wobei dies bevorzugt unter vermindertem Druck (Vakuum) erfolgt. Daneben können auch klassische Destillationsverfahren zum Einsatz kommen, bei denen das Polyethercarbonatpolyol z.B. in einem Kolben oder Rührkessel auf eine Temperatur von 80 bis 200°C erhitzt wird, und die leicht flüchtigen Bestandteile über Kopf abdestilliert werden. Zur Steigerung der Effizienz der Destillation kann dabei sowohl unter vermindertem Druck und/oder Einsatz eines inerten Strippgases (z.B. Stickstoff) und/oder Einsatz eines Schleppmittels (z.B. Wasser oder inertes organisches Lösungsmittel) gearbeitet werden. Daneben kann die Reduktion der flüchtigen Bestandteile auch durch Vakuum-Strippen in einer Packungskolonne erfolgen, wobei als Strippgas üblicherweise Wasserdampf oder Stickstoff zum Einsatz kommen.

DMC-Katalysatoren zur Verwendung in der Homopolymerisation von Alkylenoxiden sind im Prinzip aus dem Stand der Technik bekannt (siehe z.B. US-A 3 404 109, US-A 3 829 505, US-A 3 941 849 und US-A 5 158 922). DMC-Katalysatoren, die z.B. in US-A 5 470 813, EP-A 700 949, EP-A 743 093, EP-A 761 708, WO 97/40086, WO 98/16310 und WO 00/47649 beschrieben sind, besitzen eine sehr hohe Aktivität und ermöglichen die Herstellung von Polyethercarbonatpolyolen bei sehr geringen Katalysatorkonzentrationen, so dass eine Abtrennung des Katalysators aus dem fertigen Produkt i.a. nicht mehr erforderlich ist. Ein typisches Beispiel sind die in EP-A 700 949 beschriebenen hochaktiven DMC-Katalysatoren, die neben einer Doppelmetallcyanid-Verbindung (z.B. Zinkhexacyanocobaltat(III)) und einem organischen Komplexliganden (z.B. tert.-Butanol) noch einen Polyether mit einem zahlenmittlerem Molekulargewicht größer als 500 g/mol enthalten.

Die DMC-Katalysatoren werden vorzugsweise erhalten, indem man

(i) im ersten Schritt eine wässrige Lösung eines Metallsalzes mit der wässrigen Lösung eines Metallcyanidsalzes in Gegenwart eines oder mehrerer organischen Komplexliganden, z.B. eines Ethers oder Alkohols, umsetzt,
(ii) wobei im zweiten Schritt der Feststoff aus der aus (i) erhaltenen Suspension durch bekannte Techniken (wie Zentrifugation oder Filtration) abgetrennt wird,
(iii) wobei gegebenenfalls in einem dritten Schritt der isolierte Feststoff mit einer wässrigen Lösung eines organischen Komplexliganden gewaschen wird (z.B. durch Resuspendieren und anschließende erneute Isolierung durch Filtration oder Zentrifugation),
(iv) wobei anschließend der erhaltene Feststoff, gegebenenfalls nach Pulverisierung, bei Temperaturen von im allgemeinen 20 - 120°C und bei Drücken von im Allgemeinen 0,1 mbar bis Normaldruck (1013 mbar) getrocknet wird,

und wobei im ersten Schritt oder unmittelbar nach der Ausfällung der Doppelmetallcyanidverbindung (zweiter Schritt) ein oder mehrere organische Komplexliganden, vorzugsweise im Überschuss (bezogen auf die Doppelmetallcyanidverbindung) und gegebenenfalls weitere komplexbildende Komponenten zugesetzt werden.

Die in den DMC-Katalysatoren enthaltenen Doppelmetallcyanid-Verbindungen sind die Reaktionsprodukte wasserlöslicher Metallsalze und wasserlöslicher Metallcyanidsalze.

Beispielsweise werden eine wässrige Lösung von Zinkchlorid (bevorzugt im Überschuss bezogen auf das Metallcyanidsalz wie beispielsweise Kaliumhexacyanocobaltat) und Kaliumhexacyanocobaltat gemischt und anschließend Dimethoxyethan (Glyme) oder *tert*-Butanol (vorzugsweise im Überschuss, bezogen auf Zinkhexacyanocobaltat) zur gebildeten Suspension gegeben.

Zur Herstellung der Doppelmetallcyanid-Verbindungen geeignete Metallsalze besitzen bevorzugt die allgemeine Formel (II),

$M(X)_n$ (II)

wobei

M ausgewählt ist aus den Metallkationen $Zn^{2+}$, $Fe^{2+}$, $Ni^{2+}$, $Mn^{2+}$, $Co^{2+}$, $Sr^{2+}$, $Sn^{2+}$, $Pb^{2+}$ und, $Cu^{2+}$, bevorzugt ist M $Zn^{2+}$, $Fe^{2+}$, $Co^{2+}$ oder $Ni^{2+}$,
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
n ist 1, wenn X = Sulfat, Carbonat oder Oxalat ist und
n ist 2, wenn X = Halogenid, Hydroxid, Carboxylat, Cyanat, Thiocyanat, Isocyanat, Isothiocyanat oder Nitrat ist,

oder geeignete Metallsalze besitzen die allgemeine Formel (III),

$M_r(X)_3$ (III)

wobei

M ausgewählt ist aus den Metallkationen $Fe^{3+}$, $Al^{3+}$, $Co^{3+}$ und $Cr^{3+}$,
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
r ist 2, wenn X = Sulfat, Carbonat oder Oxalat ist und
r ist 1, wenn X = Halogenid, Hydroxid, Carboxylat, Cyanat, Thiocyanat, Isocyanat, Isothiocyanat oder Nitrat ist,

oder geeignete Metallsalze besitzen die allgemeine Formel (IV),

$M(X)_s$ (IV)

wobei

M ausgewählt ist aus den Metallkationen $Mo^{4+}$, $V^{4+}$ und $W^{4+}$
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
s ist 2, wenn X = Sulfat, Carbonat oder Oxalat ist und
s ist 4, wenn X = Halogenid, Hydroxid, Carboxylat, Cyanat, Thiocyanat, Isocyanat, Isothiocyanat oder Nitrat ist,

oder geeignete Metallsalze besitzen die allgemeine Formel (V),

$M(X)_t$ (V)

wobei

M ausgewählt ist aus den Metallkationen $Mo^{6+}$ und $W^{6+}$
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
t ist 3, wenn X = Sulfat, Carbonat oder Oxalat ist und
t ist 6, wenn X = Halogenid, Hydroxid, Carboxylat, Cyanat, Thiocyanat, Isocyanat, Isothiocyanat oder Nitrat ist,

Beispiele geeigneter Metallsalze sind Zinkchlorid, Zinkbromid, Zinkjodid, Zinkacetat, Zinkacetylacetonat, Zinkbenzoat, Zinknitrat, Eisen(II)sulfat, Eisen(II)bromid, Eisen(II)chlorid, Eisen(III)chlorid, Cobalt(II)chlorid, Cobalt(II)thiocyanat, Nickel(II)chlorid und Nickel(II)nitrat. Es können auch Mischungen verschiedener Metallsalze eingesetzt werden.
Zur Herstellung der Doppelmetallcyanid-Verbindungen geeignete Metallcyanidsalze besitzen bevorzugt die allgemeine Formel (VI)

$(Y)_a M'(CN)_b (A)_c$ (VI)

wobei

M' ausgewählt ist aus einem oder mehreren Metallkationen der Gruppe bestehend aus Fe(II), Fe(III), Co(II), Co(III), Cr(II), Cr(III), Mn(II), Mn(III), Ir(III), Ni(II), Rh(III), Ru(II), V(IV) und V(V), bevorzugt ist M' ein oder mehrere Metallkationen der Gruppe bestehend aus Co(II), Co(III), Fe(II), Fe(III), Cr(III), Ir(III) und Ni(II),
Y ausgewählt ist aus einem oder mehreren Metallkationen der Gruppe bestehend aus Alkalimetall (d.h. $Li^+$, $Na^+$, $K^+$, $Rb^+$)und Erdalkalimetall (d.h. $Be^{2+}$, $Mg^{2+}$, $Ca^{2+}$, $Sr^{2+}$, $Ba^{2+}$),
A ausgewählt ist aus einem oder mehreren Anionen der Gruppe bestehend aus Halogenide (d.h. Fluorid, Chlorid, Bromid, Iodid), Hydroxid, Sulfat, Carbonat, Cyanat, Thiocyanat, Isocyanat, Isothiocyanat, Carboxylat, Azid, Oxalat oder Nitrat und
a, b und c sind ganzzahlige Zahlen, wobei die Werte für a, b und c so gewählt sind, dass die Elektroneutralität des Metallcyanidsalzes gegeben ist; a ist vorzugsweise 1, 2, 3 oder 4; b ist vorzugsweise 4, 5 oder 6; c besitzt bevorzugt den Wert 0.

Beispiele geeigneter Metallcyanidsalze sind Natriumhexacyanocobaltat(III), Kaliumhexacyanocobaltat(III), Kaliumhexacyanoferrat(II), Kaliumhexacyanoferrat(III), Calcium-hexacyanocobaltat(III) und Lithiumhexacyanocobaltat(III).

Bevorzugte Doppelmetallcyanid-Verbindungen, die in den DMC-Katalysatoren enthalten sind, sind Verbindungen der allgemeinen Formel (VII)

$$M_x[M'_{x'}(CN)_y]_z \qquad (VII)$$

worin M wie in Formel (II) bis (V) und

M' wie in Formel (VI) definiert ist, und
x, x', y und z sind ganzzahlig und so gewählt, dass die Elektronenneutralität der Doppelmetallcyanidverbindung gegeben ist.

Vorzugsweise ist
x = 3, x' = 1, y = 6 und z = 2,
M = Zn(II), Fe(II), Co(II) oder Ni(II) und
M' = Co(III), Fe(III), Cr(III) oder Ir(III).

Beispiele geeigneter Doppelmetallcyanidverbindungen a) sind Zinkhexacyanocobaltat(III), Zinkhexacyanoiridat(III), Zinkhexacyanoferrat(III) und Cobalt(II)hexacyanocobaltat(III). Weitere Beispiele geeigneter Doppelmetallcyanid-Verbindungen sind z.B. US 5 158 922 (Spalte 8, Zeilen 29 - 66) zu entnehmen. Besonders bevorzugt verwendet wird Zinkhexacyanocobaltat(III).

Die bei der Herstellung der DMC-Katalysatoren zugesetzten organischen Komplexliganden sind beispielsweise in US 5 158 922 (siehe insbesondere Spalte 6, Zeilen 9 bis 65), US 3 404 109, US 3 829 505, US 3 941 849, EP-A 700 949, EP-A 761 708, JP 4 145 123, US 5 470 813, EP-A 743 093 und WO-A 97/40086) offenbart. Beispielsweise werden als organische Komplexliganden wasserlösliche, organische Verbindungen mit Heteroatomen, wie Sauerstoff, Stickstoff, Phosphor oder Schwefel, die mit der Doppelmetallcyanid-Verbindung Komplexe bilden können, eingesetzt. Bevorzugte organische Komplexliganden sind Alkohole, Aldehyde, Ketone, Ether, Ester, Amide, Harnstoffe, Nitrile, Sulfide und deren Mischungen. Besonders bevorzugte organische Komplexliganden sind aliphatische Ether (wie Dimethoxyethan), wasserlösliche aliphatische Alkohole (wie Ethanol, Isopropanol, n-Butanol, iso-Butanol, sek.-Butanol, tert-Butanol, 2-Methyl-3-buten-2-ol und 2-Methyl-3-butin-2-ol), Verbindungen, die sowohl aliphatische oder cycloaliphatische Ethergruppen wie auch aliphatische Hydroxylgruppen enthalten (wie z.B. Ethylenglykol-mono-tert.-butylether, Diethylenglykol-mono-tert.-butylether, Tripropylenglykol-mono-methylether und 3-Methyl-3-oxetan-methanol). Höchst bevorzugte organische Komplexliganden sind ausgewählt aus einer oder mehrerer Verbindungen der Gruppe bestehend aus Dimethoxyethan, tert-Butanol 2-Methyl-3-buten-2-ol, 2-Methyl-3-butin-2-ol, Ethylenglykol-mono-tert.-butylether und 3-Methyl-3-oxetan-methanol.

Optional werden bei der Herstellung der DMC-Katalysatoren eine oder mehrere komplexbildende Komponente(n) aus den Verbindungsklassen der Polyether, Polyester, Polycarbonate, Polyalkylenglykolsorbitanester, Polyalkylenglykolglycidylether, Polyacrylamid, Poly(acrylamid-co-acrylsäure), Polyacrylsäure, Poly(acrylsäure-co-maleinsäure), Polyacrylnitril, Polyalkylacrylate, Polyalkylmethacrylate, Polyvinylmethylether, Polyvinylethylether, Polyvinylacetat, Polyvinylalkohol, Poly-N-vinylpyrrolidon, Poly(N-vinylpyrrolidon-co-acrylsäure), Polyvinylmethylketon, Poly(4-vinylphenol), Poly(acrylsäure-co-styrol), Oxazolinpolymere, Polyalkylenimine, Maleinsäure- und Maleinsäureanhydridcopolymere, Hydroxyethylcellulose und Polyacetale, oder der Glycidylether, Glycoside, Carbonsäureester mehrwertiger Alkohole, Gallensäuren oder deren Salze, Ester oder Amide, Cyclodextrine, Phosphorverbindungen, $\alpha,\beta$-ungesättigten Carbon-

säureester oder ionische oberflächen- bzw. grenzflächenaktiven Verbindungen eingesetzt.

Bevorzugt werden bei der Herstellung der DMC-Katalysatoren im ersten Schritt die wässrigen Lösungen des Metallsalzes (z.B. Zinkchlorid), eingesetzt im stöchiometrischen Überschuss (mindestens 50 Mol-%) bezogen auf Metallcyanidsalz (also mindestens ein molares Verhältnis von Metallsalz zu Metallcyanidsalz von 2,25 zu 1,00) und des Metallcyanidsalzes (z.B. Kaliumhexacyanocobaltat) in Gegenwart des organischen Komplexliganden (z.B. tert.-Butanol) umgesetzt, wobei sich eine Suspension bildet, die die Doppelmetallcyanid-Verbindung (z.B. Zinkhexacyanocobaltat), Wasser, überschüssiges Metallsalz, und den organischen Komplexliganden enthält.

Der organische Komplexligand kann dabei in der wässrigen Lösung des Metallsalzes und/oder des Metallcyanidsalzes vorhanden sein, oder er wird der nach Ausfällung der Doppelmetallcyanid-Verbindung erhaltenen Suspension unmittelbar zugegeben. Es hat sich als vorteilhaft erwiesen, die wässrigen Lösungen des Metallsalzes und des Metallcyanidsalzes, und den organischen Komplexliganden unter starkem Rühren zu vermischen. Optional wird die im ersten Schritt gebildete Suspension anschließend mit einer weiteren komplexbildenden Komponente behandelt. Die komplexbildende Komponente wird dabei bevorzugt in einer Mischung mit Wasser und organischem Komplexliganden eingesetzt. Ein bevorzugtes Verfahren zur Durchführung des ersten Schrittes (d.h. der Herstellung der Suspension) erfolgt unter Einsatz einer Mischdüse, besonders bevorzugt unter Einsatz eines Strahldispergators wie in WO-A 01/39883 beschrieben.

Im zweiten Schritt erfolgt die Isolierung des Feststoffs (d.h. die Vorstufe des erfindungsgemäßen Katalysators) aus der Suspension durch bekannte Techniken, wie Zentrifugation oder Filtration.

In einer bevorzugten Ausführungsvariante wird der isolierte Feststoff anschließend in einem dritten Verfahrensschritt mit einer wässrigen Lösung des organischen Komplexliganden gewaschen (z.B. durch Resuspendieren und anschließende erneute Isolierung durch Filtration oder Zentrifugation). Auf diese Weise können zum Beispiel wasserlösliche Nebenprodukte, wie Kaliumchlorid, aus dem Katalysator entfernt werden. Bevorzugt liegt die Menge des organischen Komplexliganden in der wässrigen Waschlösung zwischen 40 und 80 Gew.-%, bezogen auf die Gesamtlösung.

Optional wird im dritten Schritt der wässrigen Waschlösung weitere komplexbildende Komponente, bevorzugt im Bereich zwischen 0,5 und 5 Gew.-%, bezogen auf die Gesamtlösung, zugefügt.

Außerdem ist es vorteilhaft, den isolierten Feststoff mehr als einmal zu waschen. Vorzugsweise wird in einem ersten Waschschritt (iii-1) mit einer wässrigen Lösung des organischen Komplexliganden (beispielsweise mit einer wässrigen Lösung des ungesättigten Alkohols) gewaschen (z.B. durch Resuspendieren und anschließende erneute Isolierung durch Filtration oder Zentrifugation), um auf diese Weise zum Beispiel wasserlösliche Nebenprodukte, wie Kaliumchlorid, aus dem Katalysator zu entfernen. Besonders bevorzugt liegt die Menge des organischen Komplexliganden (beispielsweise ungesättigten Alkohols) in der wässrigen Waschlösung zwischen 40 und 80 Gew.-%, bezogen auf die Gesamtlösung des ersten Waschschritts. In den weiteren Waschschritten (iii-2) wird entweder der erste Waschschritt einmal oder mehrmals, vorzugsweise einmal bis dreimal wiederholt, oder vorzugsweise wird eine nichtwässrige Lösung, wie z.B. eine Mischung oder Lösung aus organischen Komplexliganden (beispielsweise ungesättigter Alkohol) und weiterer komplexbildender Komponente (bevorzugt im Bereich zwischen 0,5 und 5 Gew.-%, bezogen auf die Gesamtmenge der Waschlösung des Schrittes (iii-2)), als Waschlösung eingesetzt und der Feststoff damit einmal oder mehrmals, vorzugsweise einmal bis dreimal gewaschen.

Der isolierte und gegebenenfalls gewaschene Feststoff wird anschließend, gegebenenfalls nach Pulverisierung, bei Temperaturen von im allgemeinen 20 - 100°C und bei Drücken von im Allgemeinen 0,1 mbar bis Normaldruck (1013 mbar) getrocknet.

Ein bevorzugtes Verfahren zur Isolierung der DMC-Katalysatoren aus der Suspension durch Filtration, Filterkuchenwäsche und Trocknung wird in WO-A 01/80994 beschrieben.

Neben den bevorzugt eingesetzten DMC-Katalysatoren auf Basis von Zinkhexacyanocobaltat ($Zn_3[Co(CN)_6]_2$) können für das erfindungsgemäße Verfahren auch andere dem Fachmann aus dem Stand der Technik für die Copolymerisation von Epoxiden und Kohlendioxid bekannte Metallkomplexkatalysatoren auf Basis der Metalle Zink und/oder Cobalt eingesetzt werden. Dies beinhaltet insbesondere sogenannte Zink-Glutarat-Katalysatoren (beschrieben z.B. in M. H. Chisholm et al., Macromolecules 2002, 35, 6494), sogenannte Zink-Diiminat-Katalysatoren (beschrieben z.B. in S. D. Allen, J. Am. Chem. Soc. 2002, 124, 14284) und sogenannte Cobalt-Salen-Katalysatoren (beschrieben z.B. in US 7,304,172 B2, US 2012/0165549 A1).

Nach der Durchführung des erfindungsgemäßen Verfahrens zur Herstellung des Polyethercarbonatpolyols enthält das resultierende Reaktionsgemisch den DMC-Katalysator in der Regel in Form feiner dispergierter Feststoffpartikel. Daher kann es wünschenswert sein, den DMC-Katalysator möglichst vollständig aus dem resultierenden Reaktionsgemisch zu entfernen. Die Abtrennung des DMC-Katalysators hat einerseits den Vorteil, dass das resultierende Polyethercarbonatpolyol industrie- oder zertifizierungsrelevante Grenzwerte beispielsweise bzgl. Metallgehalten oder bzgl. bei einem Verbleib aktivierten Katalysators im Produkt andernfalls resultierenden Emissionen erfüllt und andererseits dient es der Rückgewinnung des DMC-Katalysators.

Der DMC-Katalysator kann mit Hilfe verschiedener Methoden weitestgehend oder vollständig entfernt werden: Der DMC-Katalysator kann zum Beispiel mit Hilfe der Membranfiltration (Nano-, Ultra- oder Querstromfiltration), mit Hilfe

der Kuchenfiltration, mit Hilfe der Pre-Coat Filtration oder mittels Zentrifugation vom Polyethercarbonatpolyol abgetrennt werden.

Vorzugsweise wird zur Abtrennung des DMC-Katalysators ein mehrstufiges Verfahren bestehend aus mindestens zwei Schritten angewendet.

Beispielsweise wird in einem ersten Schritt das zu filtrierende Reaktionsgemisch in einem ersten Filtrationsschritt in einen größeren Teilstrom (Filtrat), bei dem ein Großteil des Katalysators oder der gesamte Katalysator abgetrennt wurde, und einen kleineren Reststrom (Retentat), der den abgetrennten Katalysator enthält, aufgeteilt. In einem zweiten Schritt wird dann der Reststrom einer Dead-End Filtration unterzogen. Hieraus wird ein weiterer Filtratstrom, bei dem ein Großteil des Katalysators oder der gesamte Katalysator abgetrennt wurde, sowie ein feuchter bis weitestgehend trockener Katalysatorrückstand gewonnen.

Alternativ kann der im Polyethercarbonatpolyol enthaltene Katalysator aber auch in einem ersten Schritt einer Adsorption, Agglomeration/Koagulation und/oder Flokkulation unterzogen werden, auf die in einem zweiten oder mehreren nachfolgenden Schritten die Abtrennung der Feststoffphase von dem Polyethercarbonatpolyol folgt. Geeignete Adsorbentien zur mechanisch-physikalischen und/oder chemischen Adsorption umfassen unter anderem aktivierte oder nichtaktivierte Tonerden bzw. Bleicherden (Sepiolite, Montmorillonite, Talk etc.), synthetische Silikate, Aktivkohle, Kieselerden/Kieselgure und aktivierte Kieselerden/Kieselgure in typischen Mengenbereichen von 0,1 Gew% bis 2 Gew%, bevorzugt 0,8 Gew% bis 1,2 Gew% bezogen auf das Polyethercarbonatpolyol bei Temperaturen von 60°C bis 140°C bevorzugt 90°C bis 110°C und Verweilzeiten von 20 min bis 100 min, bevorzugt 40 min bis 80 min, wobei der Adsorptionsschritt inklusive des Einmischens des Adsorbens batchweise oder kontinuierlich durchgeführt werden kann.

Ein bevorzugtes Verfahren zur Abtrennung dieser Feststoffphase (bestehend z.B. aus Adsorbens und DMC-Katalysator) von dem Polyethercarbonatpolyol stellt die Pre-Coat Filtration dar. Hierbei wird die Filteroberfläche abhängig vom Filtrationsverhalten, welches von Teilchengrößenverteilung der abzutrennenden Feststoffphase, mittlerem spezifischem Widerstand des resultierenden Filterkuchens sowie dem Gesamtwiderstand von Pre-Coat-Schicht und Filterkuchen bestimmt wird, mit einem permeablen/durchlässigen Filtrationshilfsmittel (z.B. anorganisch: Celite, Perlite; organisch: Zellulose) mit einer Schichtdicke von 20 mm bis 250 mm bevorzugt 100 mm bis 200 mm beschichtet ("Pre-Coat"). Die Abtrennung der Mehrheit der Feststoffphase (bestehend z.B. aus Adsorbens und DMC-Katalysator) erfolgt dabei an der Oberfläche der Pre-Coat Schicht in Kombination mit einer Tiefenfiltration der kleineren Teilchen innerhalb der Pre-Coat Schicht. Die Temperatur des zu filtrierenden Rohprodukts liegt dabei im Bereich 50°C bis 120°C, bevorzugt 70°C bis 100°C.

Um einen ausreichenden Produktstrom durch die Pre-Coat Schicht und die darauf aufwachsende Kuchenschicht zu gewährleisten, können die Kuchenschicht sowie ein geringer Teil der Pre-Coat Schicht (periodisch oder kontinuierlich) mittels eines Schabers oder Messers abgetragen und aus dem Prozess entfernt werden. Die Verstellung des Schabers bzw. Messers erfolgt dabei mit minimalen Vorschub-Geschwindigkeiten von ca. 20 $\mu$m/min - 500 $\mu$m/min, bevorzugt im Bereich 50 $\mu$m/min - 150 $\mu$m/min.

Sobald die Pre-Coat Schicht durch diesen Prozess weitestgehend oder vollständig abgetragen wurde, wird die Filtration angehalten und eine neue Pre-Coat Schicht auf die Filterfläche aufgezogen. Hierbei kann das Filterhilfsmittel beispielsweise in zyklischem Propylencarbonat suspendiert sein.

Typischerweise wird diese Pre-Coat Filtration in Vakuum-Trommel-Filtern durchgeführt. Um im Fall eines viskosen Feedstroms technisch relevante Filtratdurchsätze im Bereich von 0,1 $m^3/(m^2 \bullet h)$ bis 5 $m^3/(m^2 \bullet h)$zu realisieren, kann das Trommel-Filter auch als Druck-Trommel-Filter mit Druckdifferenzen von bis zu 6 bar und mehr zwischen dem zu filtrierenden Medium und der Filtratseite ausgeführt werden.

Grundsätzlich kann die Abtrennung des DMC-Katalysators aus dem resultierenden Reaktionsgemisch des erfindungsgemäßen Verfahrens sowohl vor Entfernung von flüchtigen Bestandteilen (wie z.B. zyklischem Propylencarbonat) als auch nach der Abtrennung von flüchtigen Bestandteilen erfolgen.

Ferner kann die Abtrennung des DMC-Katalysators aus dem resultierenden Reaktionsgemisch des erfindungsgemäßen Verfahrens mit oder ohne den weiteren Zusatz eines Lösungsmittels (insbesondere zyklischem Propylencarbonat) zwecks Absenkung der Viskosität vor oder während der einzelnen, beschriebenen Schritte der Katalysatorabtrennung durchgeführt werden.

Die nach dem erfindungsgemäßen Verfahren erhältlichen Polyethercarbonatpolyole weisen einen geringen Gehalt an Nebenprodukten auf und können problemlos verarbeitet werden, insbesondere durch Umsetzung mit Di- und/oder Polyisocyanaten zu Polyurethanen, insbesondere Polyurethan-Weichschaumstoffen. Für eine bevorzugte Ausführungsform der Erfindung war es daher die Aufgabe, Polyethercarbonatpolyole zur Verfügung zu stellen, die sowohl nach thermischer Belastung einen möglichst geringen Gehalt an Dioxanen aufweisen wie auch zur Herstellung von Polyurethan-Weichschaumstoffen geeignet sind. Für Polyurethananwendungen werden vorzugsweise Polyethercarbonatpolyole eingesetzt, die auf einer H-funktionellen Startersubstanz basieren, welche eine Funktionalität von mindestens 2 besitzt.

Des Weiteren können die nach dem erfindungsgemäßen Verfahren erhältlichen Polyethercarbonatpolyole in Anwendungen wie Wasch- und Reinigungsmittelformulierungen, Bohrflüssigkeiten, Kraftstoffadditiven, ionischen und nicht-ionischen Tensiden, Schmiermitteln, Prozesschemikalien für die Papier- oder Textilherstellung oder kosmetischen Formulierungen verwendet werden.

Dem Fachmann ist bekannt, dass abhängig vom jeweiligen Anwendungsgebiet die zu verwendenden Polyethercarbonatpolyole gewisse Stoffeigenschaften wie beispielsweise Molekulargewicht, Viskosität, Funktionalität und/oder Hydroxylzahl erfüllen müssen.

## Beispiele:

Methoden:

### OH-Zahl:

Die Bestimmung der OH-Zahlen (Hydroxylzahlen) erfolgte gemäß der Vorschrift der DIN 53240.

### Viskosität:

Die Viskositäten wurden mittels Rotationsviskosimeter (Physica MCR 51, Hersteller: Anton Paar) bei einer Scherrate von 5 $s^{-1}$ nach der Vorschrift der DIN 53018 ermittelt.

### GPC:

Das Zahlenmittel $M_n$ und das Gewichtsmittel $M_w$ des Molekulargewichts sowie die Polydispersität ($M_w/M_n$) der Produkte wurde mittels Gelpermeationschromatographie (GPC) bestimmt. Es wurde vorgegangen nach DIN 55672-1: "Gelpermeationschromatographie, Teil 1 - Tetrahydrofuran als Elutionsmittel" (SECurity GPC-System von PSS Polymer Service, Flussrate 1,0 ml/min; Säulen: 2xPSS SDV linear M, 8×300 mm, 5 μm; RID-Detektor). Dabei wurden Polystyrolproben bekannter Molmasse zur Kalibrierung verwendet.

### $CO_2$-Gehalt im Polyethercarbonatpolyol:

Der Anteil an eingebautem $CO_2$, im resultierenden Polyethercarbonatpolyol sowie das Verhältnis von Propylencarbonat zu Polyethercarbonatpolyol wurden mittels $^1$H-NMR (Firma Bruker, DPX 400, 400 MHz; Pulsprogramm zg30, Wartezeit d1: 10s, 64 Scans) bestimmt. Die Probe wurde jeweils in deuteriertem Chloroform gelöst. Die relevanten Resonanzen im $^1$H-NMR (bezogen auf TMS = 0 ppm) sind wie folgt:
Cyclisches Carbonat (welches als Nebenprodukt gebildet wurde) mit Resonanz bei 4,5 ppm, Carbonat, resultierend aus im Polyethercarbonatpolyol eingebautem Kohlendioxid mit Resonanzen bei 5,1 bis 4,8 ppm, nicht abreagiertes PO mit Resonanz bei 2,4 ppm, Polyetherpolyol (d.h. ohne eingebautes Kohlendioxid) mit Resonanzen bei 1,2 bis 1,0 ppm, das als Startermolekül (soweit vorhanden) eingebaute 1,8 Octandiol mit einer Resonanz bei 1,6 bis 1,52 ppm.

Der Molenanteil des im Polymer eingebauten Carbonats in der Reaktionsmischung wird nach Formel (VIII) wie folgt berechnet, wobei folgende Abkürzungen verwendet werden:

F(4,5) = Fläche der Resonanz bei 4,5 ppm für cyclisches Carbonat (entspricht einem H Atom)
F(5,1-4,8) = Fläche der Resonanz bei 5,1-4,8 ppm für Polyethercarbonatpolyol und einem H-Atom für cyclisches Carbonat.
F(2,4) = Fläche der Resonanz bei 2,4 ppm für freies, nicht abreagiertes PO
F(1,2-1,0) = Fläche der Resonanz bei 1,2-1,0 ppm für Polyetherpolyol
F(1,6-1,52) = Fläche der Resonanz bei 1,6 bis 1,52 ppm für 1,8 Octandiol (Starter), soweit vorhanden

Unter Berücksichtigung der relativen Intensitäten wurde gemäß der folgenden Formel (VIII) für das polymer gebundene Carbonat ("lineares Carbonat" LC) in der Reaktionsmischung in mol% umgerechnet:

$$LC = \frac{F(5{,}1-4{,}8) - F(4{,}5)}{F(5{,}1-4{,}8) + F(2{,}4) + 0{,}33 * F(1{,}2-1{,}0) + 0{,}25 * F(1{,}6-1{,}52)} * 100 \qquad (VIII)$$

Der Gewichtsanteil (in Gew.-%) polymer-gebundenen Carbonats (LC') in der Reaktionsmischung wurde nach Formel (IX) berechnet,

$$LC' = \frac{[F(5{,}1-4{,}8)-F(4{,}5)]*102}{N}*100\% \qquad (IX)$$

wobei sich der Wert für N ("Nenner" N) nach Formel (X) berechnet:

$$N = [F(5{,}1-4{,}8)-F(4{,}5)]*102+F(4{,}5)*102+F(2{,}4)*58+0{,}33*F(1{,}2-1{,}0)*58+0{,}25*F(1{,}6-1{,}52)*146 \qquad (X)$$

Der Faktor 102 resultiert aus der Summe der Molmassen von $CO_2$ (Molmasse 44 g/mol) und der von Propylenoxid (Molmasse 58 g/mol), der Faktor 58 resultiert aus der Molmasse von Propylenoxid und der Faktor 146 resultiert aus der Molmasse des eingesetzten Starters 1,8-Octandiol (soweit vorhanden).

Der Gewichtsanteil (in Gew.-%) an cyclischem Carbonat (CC') in der Reaktionsmischung wurde nach Formel (XI) berechnet,

$$CC' = \frac{F(4{,}5)*102}{N}*100\% \qquad (XI)$$

wobei sich der Wert für N nach Formel (X) berechnet.

Um aus den Werten der Zusammensetzung der Reaktionsmischung die Zusammensetzung bezogen auf den Polymer-Anteil (bestehend aus Polyetherpolyol, welches aus Starter und Propylenoxid während der unter $CO_2$-freien Bedingungen stattfindenden Aktivierungsschritten aufgebaut wurde, und Polyethercarbonatpolyol, aufgebaut aus Starter, Propylenoxid und Kohlendioxid während den in Gegenwart von $CO_2$ stattfindenden Aktivierungsschritten und während der Copolymerisation) zu berechnen, wurden die Nicht-Polymer-Bestandteile der Reaktionsmischung (d.h. cyclisches Propylencarbonat sowie ggf. vorhandenes, nicht umgesetztes Propylenoxid) rechnerisch eliminiert.

Der Gewichtsanteil der Carbonat-Wiederholungseinheiten im Polyethercarbonatpolyol wurde in einen Gewichtsanteil Kohlendioxid mittels des Faktors F=44/(44+58) umgerechnet. Die Angabe des $CO_2$-Gehalts im Polyethercarbonatpolyol ist normiert auf den Anteil des Polyethercarbonatpolyol-Moleküls, das bei der Copolymerisation und ggf. den Aktivierungsschritten in Gegenwart von $CO_2$ gebildet wurde (d.h. der Anteil des Polyethercarbonatpolyol-Moleküls, der aus dem Starter (1,8-Octandiol, soweit vorhanden) sowie aus der Reaktion des Starters mit Epoxid resultiert, das unter $CO_2$-freien Bedingungen zugegeben wurde, wurde hierbei nicht berücksichtigt).
Aus dem $CO_2$-Gehalt, der Hydroxylzahl und dem eingesetzten Starter wurde für das jeweilige Polyethercarbonatpolyol jeweils das Verhältnis von e/f (siehe Formel (Ia)) berechnet.

**DMD-Gehalt:**

Die qualitative und quantitative Bestimmung der Dimethyldioxane (nachfolgend DMD bezeichnet) aus Polyethercarbonatpolyolen erfolgte mittels Headspace-GC/MS.

Als Geräte wurden eingesetzt:

Gaschromatograph:

Fa: Thermo Scientific
Bezeichnung: Trace GC Ultra
Seriennummer: 6201252621

Massenspektrometer:

Fa: Thermo Scientific
Bezeichnung: ISQ Single Quadrupole MS
Seriennummer: ISQ121046

Headspace-Sampler:

Fa: Perkin Elmer

Bezeichnung: Turbo Matrix 40 Trap
Seriennummer: M41L0505273

1. Methode

Die Proben wurden bis unmittelbar vor dem Einwiegen fest verschlossen im Kühlschrank bei 5°C aufbewahrt. Ca. 10 bis 15 mg der betreffenden Probe wurden in ein volumengenaues 22 ml Headspace-Probengläschen überführt und auf ± 0.3 mg genau (nominell ± 0.1 mg) eingewogen. Das Probengläschen wurde sorgfältig verschlossen und im Headspace-Einlasssystem (Perkin Elmer TurboMatrix 40 Trap Headspace Sampler) für 15 min auf 150°C gebracht. Anschließend wurde die Injektionsnadel zum Druckaufbau eingeführt, und der Druck innerhalb von 2 min auf 236 kPa gebracht. Schließlich wurde die Injektionsnadel voll eingeführt und für 0.08 min (4.8 sec) aus dem Dampfraum in die Transferleitung 1 (zwischen Headspace-Probengeber und Gaschromatograph) injiziert. Nadeltemperatur: 153°C: Temperatur der Transferleitung 1: 157°C.

GC-Parameter: Injektor-Temperatur 210°C, Injektor-Druck 210 kPa, GC-Injektor-Split 10 ml / min, zusätzlicher Split hinter dem GC-Injektor auf zwei Säulen des Typs Restek Rxi-5Sil MS (Dimethylsiloxan mit 5% Phenylanteil), je ca. 20 m Länge, 0.15 mm Innendurchmesser und 2 µm Filmdicke. Temperaturprogramm: 2 min bei 45°C, von 45 auf 150°C mit 12°C / min, von 150 auf 310°C mit 45°C / min, 15 min bei 310°C. GC-Gerät: Thermo Trace GC Ultra.

Detektion Säule 1: FID, 280°C, Wasserstoff 37 ml / min, Luft 320 ml / min. Makeup-Gas Helium 15 ml / min.

Detektion Säule 2: 70 eV EI-MS mit Thermo ISQ, Temperatur der Transferleitung 2 (zwischen dem Ende der Säule 2 und der MS-Ionenquelle) 270°C, Temperatur der Ionenquelle 250°C, eingestellter Massenbereich 20 bis 420 Dalton (z = 1), Scandauer 0.4 sec.

2. Zuordnung

Die Zuordnung wurde auf Basis der 70 eV EI-Massenspektren durchgeführt. Es treten 4 Isomere im Bereich RT 8 bis 10 min auf. Die Spektren dieser Isomere unterscheiden sich kaum: Molekülion m/z 116, Basepeak m/z 42, logischer Neutralverlust von 15 Masseneinheiten zu m/z 101 (M - CH3).

3. Quantitative Bestimmung

Grundlage der quantitativen Bestimmungen war die externe Kalibrierung mittels eines Destillats, welches zu ca. 70 Gew.-% aus Dimethyldioxanen bestand. Der Dimethyldioxan-Absolutgehalt im Destillat wurde durch quantitative 1H-NMR (Q-NMR) ermittelt. Die externe Kalibrierung wurde als Faktor-Methode mit Doppelbestimmung durchgeführt. FID-Flächen bzw. area counts wurden als Summenwerte der 4 Isomere bestimmt. Die Berechnung der Dimethyldioxan-Absolutmasse geschah mittels Faktor, und die der Konzentration in der betreffenden Probe über deren exakte Probeneinwaage. Es wurden in der Regel Doppelbestimmungen durchgeführt. Zur Absicherung wurde der Faktor regelmäßig durch Wiederholungsmessungen überprüft.

Chemikalien:

Die in den Beispielen eingesetzten Phosphor-Additive (Komponente K) wurden jeweils bei Sigma-Aldrich Chemie GmbH, München, Deutschland gekauft.

**Herstellung von Polyethercarbonatpolyol A**

In einen mit Stickstoff gespülten 60L Druckreaktor mit Gasdosierungseinrichtung wurde eine Suspension aus 16,0 g getrocknetem DMC-Katalysator (hergestellt gemäß WO 01/80994 A1, dortiges Beispiel 6) sowie 4700 g cyclischem Propylencarbonat (cPC) vorgelegt. Der Reaktor wurde auf ca. 100 °C aufgeheizt und 1 h bei Unterdruck (100 mbar) mit $N_2$ inertisiert. Anschließend wurde mit $CO_2$ auf einen Druck von 74 bar beaufschlagt. In den Reaktor wurden bei 110 °C unter Rühren (316 U/min) 500 g Propylenoxid (PO) schnell eindosiert. Das Anspringen der Reaktion machte sich durch eine Temperaturspitze ("Hotspot") und eine Druckabnahme bemerkbar. Nach der erfolgten Aktivierung wurden das restliche Propylenoxid (32,04 kg) mit 8,7 kg/h und 1,188 kg des Starters Glycerin (versetzt mit 180 ppm 85%-iger $H_3PO_4$) mit 0,4 kg/h gleichzeitig in den Reaktor eindosiert. Gleichzeitig wurde die Reaktionstemperatur auf 105 °C gesenkt. Der Fortschritt der Reaktion wurde am $CO_2$-Verbrauch beobachtet, wobei durch kontinuierliche geregelte Nachdosierung der Druck im Reaktor bei dem oben angegebenen Wert (74 bar) gehalten wurde. Nach beendeter PO-Zugabe wurde bei 105 °C gerührt mit 316 U/min, bis kein weiterer Abfall des Drucks mehr festgestellt wurde. Das resultierende Produkt wurde auf zwei Chargen aufgeteilt.

Charge 1:

Die thermische Reduktion des Gehalts an leicht flüchtigen Bestandteilen der ersten Charge an Produkt erfolgte über einem Dünnschichtverdampfer (T = 140 °C, p < 3 mbar, 400 U/min). Das resultierende Polyethercarbonatpolyol A1 wurde analytisch untersucht, wobei die nachfolgenden Ergebnisse erhalten wurden.

Polyethercarbonatpolyol A1:

OH-Zahl = 55,8 mg KOH/g
Viskosität (25°C) = 19650 mPas
$CO_2$-Gehalt = 20,0%
Polydispersität ($M_w/M_n$) = 1,12
DMD-Gehalt = 360 ppm
Verhältnis e/f = 1 / 1,91

Charge 2:

Die thermische Reduktion des Gehalts an leicht flüchtigen Bestandteilen der zweiten Charge an Produkt erfolgte durch zweimaliges Dünnschichten über einem Dünnschichtverdampfer (T = 140 °C, p < 3 mbar, 400 U/min). Das resultierende Polyethercarbonatpolyol A2 wurde analytisch untersucht, wobei die nachfolgenden Ergebnisse erhalten wurden.

Polyethercarbonatpolyol A2:

OH-Zahl = 55,2 mg KOH/g
Viskosität (25°C) = 17400 mPas
$CO_2$-Gehalt = 20,0%
Polydispersität ($M_w/M_n$) = 1,12
DMD-Gehalt = 140 ppm
Verhältnis e/f = 1 / 1,92

Lagerungsversuche mit Polyethercarbonatpolyol A1:

Vergleichsbeispiel 1

100 g des Polyethercarbonatpolyols A1 wurden in einem verschlossenen Schraubdeckelglas bei 180°C für 24 h gelagert. Anschließend wurde der DMD-Gehalt des gelagerten Polyethercarbonatpolyols A1 bestimmt.

Beispiele 2 bis 4

100 g des eingesetzten Polyethercarbonatpolyols A1 wurden mit Komponente K in der in Tabelle 1 angegebenen Art und Menge vermischt und in einem verschlossenen Schraubdeckelglas bei 180°C für 24 h gelagert. Anschließend wurde jeweils der DMD-Gehalt des gelagerten Polyethercarbonatpolyols bestimmt.

Tabelle 1: Lagerversuche mit Polyethercarbonatpolyol A1

| Beispiel | Komponente K | Lager-temperatur [°C] | Lagerzeit [h] | DMD-Gehalt [ppm] |
|---|---|---|---|---|
| 1 (Vgl) | --- | 180 | 24 | 3256 |
| 2 | 125 ppm Phosphorsäure | 180 | 24 | 212 |
| 3 | 270 ppm Phosphorsäuredibutylester | 180 | 24 | 319 |
| 4 | 500 ppm Phosphorsäuretriethylester | 180 | 24 | 180 |

(fortgesetzt)

| Beispiel | Komponente K | Lager-temperatur [°C] | Lagerzeit [h] | DMD-Gehalt [ppm] |
|---|---|---|---|---|
| 4a | 5000 ppm Phosphorsäuretriethylester | 180 | 24 | 322 |
| Vgl = Vergleichsbeispiel | | | | |

Die in Tabelle 1 zusammengefassten Versuche wurden ausgehend von Polyethercarbonatpolyol A1 mit einem DMD-Gehalt von 360 ppm durchgeführt. Die Ergebnisse der Tabelle 1 zeigen, dass das Polyethercarbonatpolyol A1 enthaltend Komponente K nach thermischer Lagerung überraschend einen geringeren DMD-Gehalt aufweist (Beispiele 2 bis 4), sowie dass der DMD-Gehalt im Polyethercarbonatpolyol A1 nach thermischer Lagerung ohne Komponente K deutlich ansteigt (Vergleichsbeispiel 1).

Lagerungsversuche mit Polyethercarbonatpolyol A2:

Vergleichsbeispiel 5

100 g des Polyethercarbonatpolyols A2 wurden in einem verschlossenen Schraubdeckelglas bei 80°C für 28 Tage gelagert. Anschließend wurde der DMD-Gehalt des gelagerten Polyethercarbonatpolyols A2 bestimmt.

Beispiele 6 und 7

100 g des eingesetzten Polyethercarbonatpolyols A2 wurden mit Komponente K in der in Tabelle 2 angegebenen Art und Menge vermischt und in einem verschlossenen Schraubdeckelglas bei 80°C für 28 Tage gelagert. Anschließend wurde jeweils der DMD-Gehalt des gelagerten Polyethercarbonatpolyols bestimmt.

Tabelle 2: Lagerversuche mit Polyethercarbonatpolyol A2

| Beispiel | Additiv | Lager-temperatur | Lagerzeit [Tage] | DMD-Gehalt [ppm] |
|---|---|---|---|---|
| 5 (Vgl) | --- | 80 | 28 | 440 |
| 6 | 125 ppm Phosphorsäure | 80 | 28 | 74 |
| 7 | 270 ppm Phosphorsäuredibutylester | 80 | 28 | 72 |
| Vgl = Vergleichsbeispiel | | | | |

Die in Tabelle 2 zusammengefassten Versuche wurden ausgehend von Polyethercarbonatpolyol A2 mit einem DMD-Gehalt von 140 ppm durchgeführt. Die Ergebnisse der Tabelle 2 zeigen, dass das Polyethercarbonatpoylol A2 enthaltend Komponente K nach thermischer Lagerung überraschend einen geringeren DMD-Gehalt aufweist (Beispiele 6 und 7), sowie dass der DMD-Gehalt im Polyethercarbonatpolyol A2 nach thermischer Lagerung ohne Komponente K deutlich ansteigt (Vergleichsbeispiel 5).

**Herstellung von Polyethercarbonatpolyol B**

In einen mit Stickstoff gespülten 60L Druckreaktor mit Gasdosierungseinrichtung wurde eine Suspension aus 14,9 g getrocknetem DMC-Katalysator (hergestellt gemäß WO 01/80994 A1, dortiges Beispiel 6) sowie 4700 g cyclischem Propylencarbonat (cPC) vorgelegt. Der Reaktor wurde auf ca. 100 °C aufgeheizt und 1 h bei Unterdruck (100 mbar) mit $N_2$ inertisiert. Anschließend wurde mit $CO_2$ auf einen Druck von 74 bar beaufschlagt. In den Reaktor wurden bei 110 °C unter Rühren (316 U/min) 500 g Propylenoxid (PO) schnell eindosiert. Das Anspringen der Reaktion machte sich durch eine Temperaturspitze ("Hotspot") und eine Druckabnahme bemerkbar. Nach der erfolgten Aktivierung wurden das restliche Propylenoxid (33,58 kg) mit 8,2 kg/h und 1,1 kg einer Mischung der Starter Glycerin (versetzt mit 180 ppm 85%-iger $H_3PO_4$) und Monopropylenglykol (Gewichtsverhältnis 85/15) mit 0,29 kg/h gleichzeitig in den Reaktor eindosiert. Gleichzeitig wurde die Reaktionstemperatur auf 105 °C gesenkt. Der Fortschritt der Reaktion wurde am $CO_2$-Verbrauch beobachtet, wobei durch kontinuierliche geregelte Nachdosierung der Druck im Reaktor bei dem oben angegebenen Wert (74 bar) gehalten wurde. Nach beendeter PO-Zugabe wurde bei 105 °C gerührt mit 316 U/min, bis kein weiterer Abfall des Drucks mehr festgestellt wurde. Das resultierende Polyethercarbonatpolyol B wurde analytisch untersucht, wobei das nachfolgende Ergebnis erhalten wurde.
DMD-Gehalt = 610 ppm

$CO_2$-Gehalt = 20,4 %
Verhältnis e/f = 1 / 1,86

In den nachfolgenden Beispielen (Vergleichsbeispiel 8 und Beispiele 9 und 10) erfolgte die thermische Reduktion des Gehalts leicht flüchtiger Bestandteile mittels eines Kurzwegverdampfers:
Dieser Kurzwegverdampfer war derart ausgestaltet, dass das Polyethercarbonatpolyol B mit einer Temperatur von 80°C von oben auf eine senkrecht stehende Verdampferfläche geleitet wurde. Bei der Verdampferfläche handelte es sich um ein Rohr mit einem mittig angeordneten mechanischen Rührsystem. Dabei resultierte durch das Rührsystem mit beweglichen Rührblättern, die an der Heizfläche entlang streifen, ein dünner Film des Polyethercarbonatpolyols B. Die dabei verdampfenden flüchtigen Bestandteile (aus dem Polyethercarbonatpolyol B) wurden an einem innenliegenden Kondensator niedergeschlagen. Die benötigte Verdampfungsenergie wurde über einen außenliegenden Doppelmantel in den dünnen Film eingebracht.
Der Kurzwegverdampfer wurde dazu mit einem Ölbad geheizt, welches auf die in Tabelle 3 angegebene Temperatur T1 eingestellt wurde. Die Heizfläche des Kurzwegverdampfers betrug 0,125 $m^2$. Die Temperatur der Kühlspirale im Innenbereich des Verdampfers und des Kondensators vor den beiden Kühlfallen wurde mittels Kryomat bei -10°C gehalten. Die Rührerdrehgeschwindigkeit lag bei 250 U/min. Das erzielte Vakuum, gemessen hinter den zwei großen Kühlfallen (gefüllt mit Trockeneis-Aceton-Mischung), betrug $p_{abs}$= 0,08 mbar (Trivac-Drehschieber-Ölpumpe).
Der Durchsatz durch den Kurzwegverdampfer betrug jeweils 300 g eingesetztes Polyethercarbonatpolyol B pro Stunde.

Vergleichsbeispiel 8: Herstellung von Polyethercarbonatpolyol B-1

300 g Polyethercarbonatpolyol B wurde einer thermischen Nachbehandlung mittels Kurzwegverdampfer gemäß der oben stehenden Beschreibung unterzogen. Der DMD-Gehalt des resultierenden Polyethercarbonatpolyols B-1 wurde ermittelt, siehe Tabelle 3.

Beispiel 9: Herstellung von Polyethercarbonatpolyol B-2

300 g Polyethercarbonatpolyol B wurden mit 125 ppm Phosphorsäure (in Form einer 40%-igen wässrigen Lösung) vermischt (90 sec bei 2300 U/min). Anschließend wurde das resultierende Gemisch einer thermischen Nachbehandlung mittels Kurzwegverdampfer gemäß der oben stehenden Beschreibung unterzogen. Der DMD-Gehalt des resultierenden Polyethercarbonatpolyols B-2 wurde ermittelt, siehe Tabelle 3.

Beispiel 10: Herstellung von Polyethercarbonatpolyol B-3

300 g Polyethercarbonatpolyol B wurden mit 210 ppm Phosphorsäuredibutylester vermischt (90 sec bei 2300 U/min). Anschließend wurde das resultierende Gemisch einer thermischen Nachbehandlung mittels Kurzwegverdampfer gemäß der oben stehenden Beschreibung unterzogen. Der DMD-Gehalt des resultierenden Polyethercarbonatpolyols B-3 wurde ermittelt, siehe Tabelle 3.

Tabelle 3: Thermische Reduktion des Gehalts leicht flüchtiger Bestandteile mittels Kurzwegverdampfer

| Beispiel | Polyethercarbonatpolyol | Temperatur T1 [°C] | Komponente K | DMD-Gehalt [ppm] |
|---|---|---|---|---|
| 8 (Vgl) | B-1 | 140 | --- | 250 |
| 9 | B-2 | 140 | 125 ppm Phosphorsäure | < 10 |
| 10 | B-3 | 140 | 210 ppm Phosphorsäuredibutylester | < 10 |
| Vgl = Vergleichsbeispiel | | | | |

Tabelle 3 zeigt, dass ausgehend von unbehandeltem Polyethercarbonatpolyol B bloße thermische Reduktion des Gehalts von leicht flüchtigen Bestandteilen mittels Kurzwegverdampfer lediglich zu einer Verminderung des DMD-Gehaltes von 610 auf 250 ppm führt (Vergleichsbeispiel 8). Der Zusatz von 125 ppm Phosphorsäure bzw. 210 ppm Phosphorsäuredibutylester vor der thermischen Nachbehandlung mittels Kurzwegverdampfer ergibt dagegen DMD-Werte unterhalb der Nachweisgrenze, die bei 10 ppm liegt (Beispiele 9 und 10).

In den nachfolgenden Beispielen (Beispiel 11 (Vergleich) und Beispiele 12- 24) wurden jeweils 300 g Polyethercarbonatpolyol B mit verschiedenen Komponenten K in unterschiedlichen Mengen vermischt (90 sec bei 2300 U/min). Anschließend wurde das resultierende Gemisch einer thermischen Nachbehandlung mittels Kurzwegverdampfer gemäß der oben stehenden Beschreibung unterzogen, wobei die in Tabelle 4 angegebene Temperatur T1 eingestellt wurde

Der DMD-Gehalt der resultierenden Polyethercarbonatpolyole wurde ermittelt, siehe Tabelle 4.

Tabelle 4: Thermische Reduktion des Gehalts leicht flüchtiger Bestandteile mittels Kurzwegverdampfer

| Beispiel | Komponente K | Temperatur T1 [°C] | DMD-Gehalt [ppm] |
|---|---|---|---|
| 11 (Vgl) | --- | 160°C | 280 |
| 12 | 5 ppm Phosphorsäure | 160°C | 114 |
| 13 | 20 ppm Phosphorsäure | 160°C | <10 |
| 14 | 35 ppm Phosphorsäure | 160°C | <10 |
| 15 | 50 ppm Phosphorsäure | 160°C | <10 |
| 16 | 100 ppm Phosphorsäure | 160°C | <10 |
| 17 | 10 ppm Phosphorsäuredibutylester | 160°C | 26 |
| 18 | 100 ppm Phosphorsäuredibutylester | 160°C | <10 |
| 19 | 200 ppm Phosphorsäuredibutylester | 160°C | <10 |
| 20 | 400 ppm Phosphorsäuredibutylester | 160°C | <10 |
| 21 | 200 ppm Phosphorsäuretriethylester | 160°C | 12 |
| 22 | 100 ppm Triethylphosphit | 160°C | 34 |
| 23 | 100 ppm $H_3PO_3$ | 160°C | <10 |
| 24 | 200 ppm $(NH_4)_2HPO_4$ | 160°C | 14 |
| Vgl = Vergleichsbeispiel | | | |

Tabelle 4 zeigt, dass die thermische Behandlung des Polyethercarbonatpolyols B mittels Kurzwegverdampfer (T1 = 160°C) ohne Zugabe einer Komponente K lediglich zu einer Verminderung des DMD-Gehaltes von 610 auf 280 ppm führt (Vergleichsbeispiel 11). Zugabe von 5 ppm Phosphorsäure (Beispiel 12) bzw. 10 ppm Phosphorsäuredibutylester (Beispiel 17) führt hingegen bereits zu einer deutlichen Reduktion auf 114 bzw. 26 ppm DMD. Bei einer Zugabe von 20 ppm Phosphorsäure (Beispiel 13) liegt der DMD-Gehalt unterhalb der Nachweisgrenze (<10 ppm). Die Beispiele 21 bis 24 zeigen die Wirksamkeit weiterer erfindungsgemäßer Komponenten K.

Beispiel 25 (Vgl.): Umsetzung von Polyethercarbonatpolyol B mit Chlordiphenylphosphin mit Mengen an Phosphor-Verbindung gemäß Beispiel 2 aus US-A 4 145 525

Die stöchiometrische Hälfte der Hydroxylendgruppen des Polyethercarbonatpolyols wurden mit Chlordiphenylphosphin umgesetzt. Die Durchführung erfolgte gemäß Beispiel 2 aus US-A 4 145 525.

100 g des gemäß Vergleichsbeispiel 25 resultierenden Polyethercarbonatpolyols wurden in einem verschlossenen Schraubdeckelglas bei 180°C für 24 h gelagert. Anschließend wurde der DMD-Gehalt des gelagerten Polyethercarbonatpolyols bestimmt.

DMD-Gehalt nach Lagerung: 1556 ppm

**Herstellung von Polyurethan-Weichschaumstoffen**

In für die Herstellung von Polyurethanschaumstoffen üblicher Verarbeitungsweise nach dem Einstufenverfahren wurden die in den Beispielen der in der nachfolgenden Tabelle 5 aufgeführten Einsatzstoffe miteinander zur Reaktion gebracht.

Die Rohdichte wurde gemäß DIN EN ISO 3386-1-98 bestimmt.

Die Stauchhärte wurde gemäß DIN EN ISO 3386-1-98 (bei 40% Verformung und 4. Zyklus) bestimmt.

Die Zugfestigkeit und Bruchdehnung wurden bestimmt gemäß DIN EN ISO 1798.

Der Druckverformungsrest bei 50%iger Verformung (DVR 50%) und der Druckverformungsrest bei 90%iger Verformung (DVR 90%) wurden bestimmt gemäß DIN EN ISO 1856.

C1: trifunktionelles Polyetherpolyol mit einer OH-Zahl von 48 mg KOH/g, hergestellt durch DMC-katalysierte Alkoxylierung von Glycerin mit einem Gemisch von Propylenoxid und Ethylenoxid im Mengenverhältnis 89/11 und ca. 8 mol % primären OH-Gruppen.

C2 Tegostab® B 2370, Zubereitung organo-modifizierter Polysiloxane, Firma Evonik Goldschmidt

C3 Addocat® 108, Aminkatalysator der Firma Rheinchemie

C4 Addocat® SO, Zinnkatalysator der Firma Rheinchemie

TDI-1: Mischung enthaltend 80 Gew.-% 2,4-Toluylendiisocyanat und 20 Gew.-% 2,6-Toluylendiisocyanat mit einem NCO-Gehalt von 48,3 Gewichts-%.

Wie aus der Tabelle 5 ersichtlich, ließ sich basierend auf den Polyol-Komponenten enthaltend ein Polyethercarbonat-Polyol gemäß den Beispielen 4, 16, 18, 21, 22, 23, 24 eine gute Verarbeitung zu Polyurethan-Weichschaumstoffen erreichen, und es wurden Polyurethan-Weichschaumstoffe mit insgesamt gutem Eigenschaftsprofil erhalten.

Erläuterung zu Tabelle 5:

*) 24 h Lagerung bei 180°C, wie im betreffenden Beispiel angegeben.

#) nach Kurzwegverdampfer, wie im betreffenden Beispiel angegeben.

Vgl. bedeutet Vergleichsbeispiel

Tabelle 5: Herstellung von Polyurethan-Weichschaumstoffen

| Beispiel | | 26 (Vgl.) | 27 | 28 (Vgl.) | 29 | 30 | 31 | 32 | 33 | 34 | 35 (Vgl.) |
|---|---|---|---|---|---|---|---|---|---|---|---|
| Polyol-Komponente (P) | | | | | | | | | | | |
| C1 | Gew.-Tle | 100,00 | 30,00 | 30,00 | 30,00 | 30,00 | 30,00 | 30,00 | 30,00 | 30,00 | 30,00 |
| aus Beispiel 4: A1 mit 500 ppm Phosphorsäuretriethylester nach Lagerung*) | Gew.-Tle | | 70,00 | | | | | | | | |
| aus Beispiel 11 (Vgl.): B nach KV#) | Gew.-Tle | | | 70,00 | | | | | | | |
| aus Beispiel 16: B mit 100 ppm Phosphorsäure n. KV#) | Gew.-Tle | | | | 70,00 | | | | | | |
| aus Beispiel 18: B mit 100 ppm Phosphorsäuredibutylester nach KV#) | Gew.-Tle | | | | | 70,00 | | | | | |
| aus Beispiel 21: B mit 200 ppm Phosphorsäuretriethylester nach KV#) | Gew.-Tle | | | | | | 70,00 | | | | |
| aus Beispiel 22: B mit 100 ppm Triethylphosphit n. KV#) | Gew.-Tle | | | | | | | 70,00 | | | |
| aus Beispiel 23: B mit 100 ppm H3PO3 nach KV#) | Gew.-Tle | | | | | | | | 70,00 | | |
| aus Beispiel 24: B mit 200 ppm (NH4)2HPO4 n. KV#) | Gew.-Tle | | | | | | | | | 70,00 | |
| aus Beispiel 25 (Vgl.): B umgesetzt mit Chlordiphenylphosphin) | Gew.-Tle | | | | | | | | | | 70,00 |
| Wasser (zugesetzt) | Gew.-Tle | 2,50 | 2,50 | 2,50 | 2,50 | 2,50 | 2,50 | 2,50 | 2,50 | 2,50 | 2,50 |
| C2 | Gew.-Tle | 1,20 | 1,20 | 1,20 | 1,20 | 1,20 | 1,20 | 1,20 | 1,20 | 1,20 | 1,20 |
| C3 | Gew.-Tle | 0,15 | 0,15 | 0,15 | 0,15 | 0,15 | 0,15 | 0,15 | 0,15 | 0,15 | 0,15 |
| C4 | Gew.-Tle | 0,12 | 0,12 | 0,12 | 0,12 | 0,12 | 0,12 | 0,12 | 0,12 | 0,12 | 0,12 |
| Isocyanat-Komponente (Iso) | | | | | | | | | | | |
| TDI-1 Mischungsverhältnis (Gew.-Tle) P: Iso = | 100 : | 34,16 | 34,54 | 34,32 | 34,33 | 34,32 | 34,34 | 34,30 | 34,32 | 34,30 | 30,41 |
| Kennzahl | | 108,0 | 108,0 | 108,0 | 108,0 | 108,00 | 108,00 | 108,00 | 108,00 | 108,00 | 108,0 |
| Verarbeitbarkeit | | ok | ok | ok | ok | ok | ok | ok | ok | ok | Kollaps |
| Rohdichte | kg/m3 | 37,8 | 38,2 | 38,6 | 37,4 | 37,6 | 38,4 | 38,0 | 38,8 | 39,1 | |

(fortgesetzt)

| | | | | | | | | | | | |
|---|---|---|---|---|---|---|---|---|---|---|---|
| Isocyanat-Komponente (Iso) | | | | | | | | | | | |
| Stauchhärte 40% 1. Zyklus | kPa | 5,9 | 6,9 | 6,9 | 6,6 | 7,0 | 7,1 | 7,0 | 7,4 | 7,4 | |
| Stauchhärte 40% 4. Zyklus | kPa | 4,05 | 4,61 | 4,72 | 4,49 | 4,69 | 4,8 | 4,71 | 5,0 | 5,0 | |
| DVR 50% | % | 1,8 | 2,0 | 2,3 | 2,0 | 2,2 | 2,1 | 1,9 | 2,0 | 2,2 | |
| DVR 90% | % | 3,2 | 6,5 | 4,3 | 4,0 | 4,3 | 3,7 | 4,3 | 3,7 | 4,5 | |
| Zugfestigkeit | kPa | 95 | 121 | 99 | 106 | 111 | 112 | 104 | 115 | 134 | |
| Bruchdehnung | % | 180 | 195 | 152 | 166 | 178 | 188 | 163 | 175 | 191 | |

## Patentansprüche

1. Verfahren zur Herstellung von Polyethercarbonatpolyolen,

(i) wobei ein oder mehrere Alkylenoxid(e) und Kohlendioxid an eine oder mehrere H-funktionelle Startersubstanz(en) in Gegenwart eines Doppelmetallcyanid-Katalysators angelagert werden, wobei ein Reaktionsgemisch enthaltend das Polyethercarbonatpolyol erhalten wird,
**dadurch gekennzeichnet, dass**
(ii) zu dem erhaltenen Reaktionsgemisch enthaltend das Polyethercarbonatpolyol mindestens eine Komponente K gegeben wird, wobei Komponente K ausgewählt ist aus mindestens einer Verbindung aus der Gruppe bestehend aus Phosphorsäure, Phosphor¬säure¬dibutylester, Phosphorsäuretriethylester, Phosphonsäure und $(NH_4)_2HPO_4$.

2. Verfahren gemäß Anspruch 1, wobei in dem aus Schritt (i) resultierenden Polyethercarbonatpolyol vor Schritt (ii) bei einer Temperatur von 80°C bis 200 °C thermisch der Gehalt an leicht flüchtigen Bestandteilen reduziert wird.

3. Verfahren gemäß Anspruch 1 oder 2, wobei
(iii) in dem Reaktionsgemisch aus Schritt (ii) bei einer Temperatur von 80°C bis 200 °C thermisch der Gehalt an leicht flüchtigen Bestandteilen reduziert wird.

4. Verfahren gemäß Anspruch 3, wobei
(iv) zu dem Reaktionsgemisch enthaltend das Polyethercarbonatpolyol aus Schritt (iii) mindestens eine Komponente K gegeben wird.

5. Verfahren gemäß Anspruch 4, wobei Komponente K in Schritt (iv) in einer Menge von 20 ppm bis 1000 ppm zugegeben wird.

6. Verfahren gemäß einem der Ansprüche 1 bis 5, wobei Komponente K in Schritt (ii) in einer Menge von 20 ppm bis 1000 ppm zugegeben wird.

7. Verfahren gemäß einem der Ansprüche 1 bis 6, wobei das Polyethercarbonatpolyol gemäß Formel (Ia) ein Verhältnis e/f von 2 : 1 bis 1 : 20 aufweist.

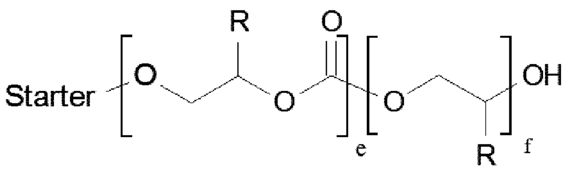

(Ia)

8. Verfahren zur Herstellung von Polyethercarbonatpolyolen,

(i) wobei ein oder mehrere Alkylenoxid(e) und Kohlendioxid an eine oder mehrere H-funktionelle Startersubstanz(en) in Gegenwart eines Metallkomplexkatalysators auf Basis der Metalle Zink und/oder Cobalt angelagert werden, wobei ein Reaktionsgemisch enthaltend das Polyethercarbonatpolyol erhalten wird,
**dadurch gekennzeichnet, dass**
(ii) zu dem erhaltenen Reaktionsgemisch enthaltend das Polyethercarbonatpolyol mindestens eine Komponente K gegeben wird, wobei Komponente K ausgewählt ist aus mindestens einer Verbindung aus der Gruppe bestehend aus Phosphorsäure, Phosphorsäuredibutylester, Phosphorsäuretriethylester, Phosphonsäure und $(NH_4)_2HPO_4$.

9. Mischung enthaltend Polyethercarbonatpolyol und Komponente K, wobei Komponente K ausgewählt ist aus mindestens einer Verbindung aus der Gruppe bestehend aus Phosphorsäure, Phosphorsäuredibutylester, Phosphorsäuretriethylester, Phosphonsäure und $(NH_4)_2HPO_4$.

10. Mischung gemäß Anspruch 9, wobei die Mischung Polyethercarbonatpolyol und Komponente K in einem Gewichtsverhältnis von 200000 : 1 bis 1000 : 1 enthält.

11. Mischung gemäß Anspruch 9, wobei die Mischung Polyethercarbonatpolyol und Komponente K in einem Gewichtsverhältnis von 50000 : 1 bis 1000 : 1 enthält.

**Claims**

1. Process for preparing polyether carbonate polyols,

(i) wherein one or more alkylene oxide(s) and carbon dioxide are added onto one or more H-functional starter substance(s) in the presence of a double metal cyanide catalyst to obtain a reaction mixture comprising the polyether carbonate polyol,
**characterized in that**
(ii) at least one component K is added to the obtained reaction mixture comprising the polyether carbonate polyol, wherein component K is selected from at least one compound from the group consisting of phosphoric acid, dibutyl phosphate, triethyl phosphate, phosphonic acid and $(NH_4)_2HPO_4$.

2. Process according to Claim 1, wherein the content of volatile constituents in the polyether carbonate polyol from step (i) is reduced by thermal means at a temperature of 80°C to 200°C prior to step (ii).

3. Process according to Claim 1 or 2, wherein
(iii) the content of volatile constituents in the reaction mixture from step (ii) is reduced by thermal means at a temperature of 80°C to 200°C.

4. Process according to Claim 3, wherein
(iv) at least one component K is added to the reaction mixture comprising the polyether carbonate polyol from step (iii).

5. Process according to Claim 4, wherein in step (iv) component K is added in an amount of from 20 ppm to 1000 ppm.

6. Process according to any of Claims 1 to 5, wherein in step (ii) component K is added in an amount of from 20 ppm to 1000 ppm.

7. Process according to any of Claims 1 to 6, wherein the polyether carbonate polyol according to formula (Ia) has an e/f ratio of 2: 1 to 1: 20.

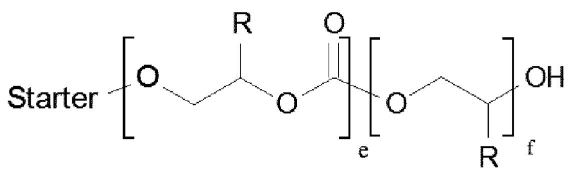

(Ia)

8. Process for preparing polyether carbonate polyols,

(i) wherein one or more alkylene oxide(s) and carbon dioxide are added onto one or more H-functional starter substance(s) in the presence of a metal complex catalyst based on the metals zinc and/or cobalt to obtain a reaction mixture comprising the polyether carbonate polyol,
**characterized in that**
(ii) at least one component K is added to the obtained reaction mixture comprising the polyether carbonate polyol, wherein component K is selected from at least one compound from the group consisting of phosphoric acid, dibutyl phosphate, triethyl phosphate, phosphonic acid and $(NH_4)_2HPO_4$.

9. Mixture comprising polyether carbonate polyol and component K, wherein component K is selected from at least one compound from the group consisting of phosphoric acid, dibutyl phosphate, triethyl phosphate, phosphonic acid and $(NH_4)_2HPO_4$.

10. Mixture according to Claim 9, wherein the mixture comprises polyether carbonate polyol and component K in a weight ratio of 200 000: 1 to 1000: 1.

**11.** Mixture according to Claim 9, wherein the mixture comprises polyether carbonate polyol and component K in a weight ratio of 50 000: 1 to 1000: 1.

## Revendications

**1.** Procédé de fabrication de polyéther-carbonate-polyols,

(i) selon lequel un ou plusieurs oxydes d'alkylène et du dioxyde de carbone sont additionnés sur une ou plusieurs substances de départ à fonction H en présence d'un catalyseur de cyanure de deux métaux, un mélange réactionnel contenant le polyéther-carbonate-polyol étant obtenu,
**caractérisé en ce que**
(ii) au moins un composant K est ajouté au mélange réactionnel obtenu contenant le polyéther-carbonate-polyol, le composant K étant choisi parmi au moins un composé du groupe constitué par l'acide phosphorique, l'ester dibutylique de l'acide phosphorique, l'ester triéthylique de l'acide phosphorique, l'acide phosphonique et $(NH_4)_2HPO_4$.

**2.** Procédé selon la revendication 1, selon lequel la teneur en constituants très volatils dans le polyéther-carbonate-polyol résultant de l'étape (i) est réduite thermiquement avant l'étape (ii) à une température de 80 °C à 200 °C.

**3.** Procédé selon la revendication 1 ou 2, selon lequel
(iii) la teneur en constituants très volatils dans le mélange réactionnel de l'étape (ii) est réduite thermiquement à une température de 80 °C à 200 °C.

**4.** Procédé selon la revendication 3, selon lequel (iv) au moins un composant K est ajouté au mélange réactionnel contenant le polyéther-carbonate-polyol de l'étape (iii).

**5.** Procédé selon la revendication 4, selon lequel le composant K est ajouté en une quantité de 20 ppm à 1 000 ppm à l'étape (iv).

**6.** Procédé selon l'une quelconque des revendications 1 à 5, selon lequel le composant K est ajouté en une quantité de 20 ppm à 1 000 ppm à l'étape (ii).

**7.** Procédé selon l'une quelconque des revendications 1 à 6, selon lequel le polyéther-carbonate-polyol selon la formule (Ia) présente un rapport e/f de 2:1 à 1:20

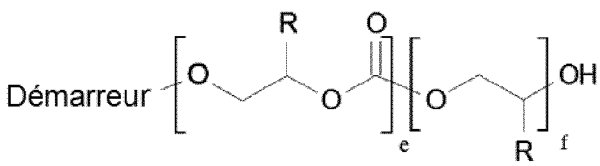

(Ia)

**8.** Procédé de fabrication de polyéther-carbonate-polyols,

(i) selon lequel un ou plusieurs oxydes d'alkylène et du dioxyde de carbone sont additionnés sur une ou plusieurs substances de départ à fonction H en présence d'un catalyseur de complexe métallique à base des métaux zinc et/ou cobalt, un mélange réactionnel contenant le polyéther-carbonate-polyol étant obtenu, **caractérisé en ce que**
(ii) au moins un composant K est ajouté au mélange réactionnel obtenu contenant le polyéther-carbonate-polyol, le composant K étant choisi parmi au moins un composé du groupe constitué par l'acide phosphorique, l'ester dibutylique de l'acide phosphorique, l'ester triéthylique de l'acide phosphorique, l'acide phosphonique et $(NH_4)_2HPO_4$.

**9.** Mélange contenant un polyéther-carbonate-polyol et un composant K, le composant K étant choisi parmi au moins un composé du groupe constitué par l'acide phosphorique, l'ester dibutylique de l'acide phosphorique, l'ester triéthylique de l'acide phosphorique, l'acide phosphonique et $(NH_4)_2HPO_4$.

**10.** Mélange selon la revendication 9, dans lequel le mélange contient le polyéther-carbonate-polyol et le composant K en un rapport en poids de 200 000:1 à 1 000:1.

**11.** Mélange selon la revendication 9, dans lequel le mélange contient le polyéther-carbonate-polyol et le composant K en un rapport en poids de 50 000:1 à 1 000:1.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0222453 A
- WO 2003029325 A
- WO 2008058913 A
- EP 2530101 A
- US 4145525 A
- EP 1359177 A
- US 3404109 A
- US 3829505 A
- US 3941849 A
- US 5158922 A
- US 5470813 A
- EP 700949 A
- EP 743093 A
- EP 761708 A
- WO 9740086 A
- WO 9816310 A
- WO 0047649 A
- JP 4145123 B
- WO 0139883 A
- WO 0180994 A
- US 7304172 B2
- US 20120165549 A1
- WO 0180994 A1


### In der Beschreibung aufgeführte Nicht-Patentliteratur


- **B. INOUE et al.** Copolymerization of Carbon Dioxide and Epoxide with Organometallic Compounds. *Die Makromolekulare Chemie,* 1969, vol. 130, 210-220
- **M. H. CHISHOLM et al.** *Macromolecules,* 2002, vol. 35, 6494
- **S. D. ALLEN.** *J. Am. Chem. Soc.,* 2002, vol. 124, 14284